(19) Europäisches Patentamt
European Patent Office
Office européen des brevets

(11) **EP 1 436 125 B1**

(12) **EUROPÄISCHE PATENTSCHRIFT**

(45) Veröffentlichungstag und Bekanntmachung des Hinweises auf die Patenterteilung:
**14.12.2011 Patentblatt 2011/50**

(21) Anmeldenummer: **01274583.2**

(22) Anmeldetag: **15.12.2001**

(51) Int Cl.:
*B25J 9/16* (2006.01)    *G05B 19/401* (2006.01)

(86) Internationale Anmeldenummer:
**PCT/DE2001/004745**

(87) Internationale Veröffentlichungsnummer:
**WO 2003/035332 (01.05.2003 Gazette 2003/18)**

(54) **VERFAHREN UND VORRICHTUNG ZUR VERRINGERUNG VON FEHLERN BEI DER POSITIONIERUNG EINES ROBOTERARMES**

METHOD AND DEVICE FOR THE REDUCTION OF ERRORS IN THE POSITIONING OF THE ARM OF A ROBOT

PROCEDE ET DISPOSITIF DE DIMINUTION D'ERREURS LORS DU POSITIONNEMENT D'UN BRAS ROBOTIQUE

(84) Benannte Vertragsstaaten:
**AT BE CH CY DE DK ES FI FR GB GR IE IT LI LU MC NL PT SE TR**

(30) Priorität: **12.10.2001 DE 10150225**

(43) Veröffentlichungstag der Anmeldung:
**14.07.2004 Patentblatt 2004/29**

(73) Patentinhaber: **VMT Vision Machine Technic Bildverarbeitungssysteme GmbH**
**68219 Mannheim (DE)**

(72) Erfinder:
• **DRECKMANN, Mathias**
**46282 Dorsten (DE)**
• **LILIENTHAL, Angela**
**45143 Essen (DE)**
• **NEDDERMEYER, Werner**
**64367 Mühltal (DE)**
• **SCHNELL, Michael**
**64625 Bensheim (DE)**

(74) Vertreter: **Mierswa, Klaus**
**MIERSWA &VONNEMANN**
**Patentanwälte**
**Postfach 10 25 52**
**68025 Mannheim (DE)**

(56) Entgegenhaltungen:
EP-A- 0 353 585    EP-A- 0 470 257
WO-A-01/00370    US-A- 4 575 802
US-A- 4 590 578    US-A- 5 769 954

• "MOBILE ROBOT SYSTEM" RESEARCH DISCLOSURE, KENNETH MASON PUBLICATIONS, HAMPSHIRE, GB, Nr. 303, 1. Juli 1989 (1989-07-01), Seiten 537-538, XP000045858 ISSN: 0374-4353

**Beschreibung**

Technisches Gebiet:

Die Erfindung betrifft Verfahren und Vorrichtungen zur Verringerung von Fehlern bei der Positionierung eines Roboterarmes, insbesondere zur Kompensierung von verformungsbedingten Abweichungen.

Stand der Technik:

Bei der herkömmlichen, im Maschinenbau anerkannten Methode werden die Verfahrachsen eines Roboters waagerecht zum Horizont mit einem Theodoliten vermessen und anschließend ausgerichtet. Der Einfluss der Verformung der Linearachse sowie der Auslenkung des Roboterarmes auf die Lage des Roboters im kartesischen Raum beim Verfahren auf der Achse wird bei der herkömmlichen Methode nicht berücksichtigt. Dies hat zur Folge, dass der Roboter bei der Ausführung seiner Aufgaben sowohl Positions- als auch Orientierungsfehler aufweist.

Durch die EP 0 353 585 A2 ist ein Verfahren zur Bahn- und Positionskorrektur eines Werkzeugs eines Roboters bekannt geworden, wobei die Soll-Position des Werkzeugs im Arbeitsbereich des Roboters in einem Bezugskoordinatensystem angebbar ist und für eine jeweils vorgebbare Soll-Position des Werkzeugs entsprechende Winkelstellungen der Robotergelenke von einer Robotersteuerung berechnet und eingestellt werden. Während einer Einmessphase wird die jeweilige Ist-Position des Werkzeugs bezüglich vorbestimmter Messpunkte, die der Robotersteuerung als Soll-Positionen vorgebbar sind, innerhalb des Arbeitsbereichs des Roboters vermessen und die jeweilige Abweichung zwischen Ist-und Soll-Position als Element einer Positionsfehler-Raummatrix in einem Speichermedium hinterlegt, wobei lediglich so viele Messpunkte gesetzt werden wie notwendig sind, um die Positionsfehler-Raummatrix unter Ausnutzung der Symmetrieeigenschaften eines jeweiligen Bezugskoordinatensystems zu bilden. Die Abweichungen zwischen Ist- und Soll-Position an den vorbestimmten Messpunkten werden zur Interpolation der Abweichungen aller zwischen den Messpunkten liegenden Werkzeugpositionen herangezogen. Aus den Abweichungen werden jeweils Korrekturwerte für die Winkelstellungen der Robotergelenke berechnet und zur Positionskorrektur des Werkzeugs herangezogen.

Durch die WO 0100370 ist ein Verfahren und eine Vorrichtung zum Kalibrieren von Manipulatoren und mitgeführten optischen Messeinrichtungen, insbesondere von mehrachsigen Messrobotern mit 3D-Sensoren, innerhalb einer Messstation für Werkstücke, insbesondere für Fahrzeugrohkarosserien, bekannt geworden, bei welchem Verfahren die Kalibrierung in einer Messkaskade mit mindestens drei Kalibrierschritten erfolgt, wobei nacheinander die optische Messeinrichtung mit ihrem Arbeitspunkt, der Manipulator mit seinen Achsen und dann die Zuordnung des Manipulators zum Werkstück kalibriert werden. Die optische Messeinrichtung wird mit ihrem Arbeitspunkt am Manipulator mittels einer genau positionierbaren Prüfeinrichtung mit einem Referenzmuster kalibriert, welches im Bereich des Arbeitspunkts temporär positioniert und durch eine Relativbewegung gegenüber der optischen Messeinrichtung mit dem Arbeitspunkt zur Deckung gebracht wird, wonach das Referenzmuster zur Ermittlung der Orts-Koordinaten des Arbeitspunktes vermessen wird. Zum Nachkalibrieren der optischen Messeinrichtung wird die Prüfeinrichtung mit dem in der Soll-Lage des Arbeitspunktes fixierten Referenzmuster in Position gebracht und die Übereinstimmung von Soll- und Ist-Lage überprüft, wobei zur Korrektur eventueller Abweichungen die optische Messeinrichtung nachgestellt oder das Referenzmuster nachgestellt und zur Ermittlung der Orts-Koordinaten des Arbeitspunktes erneut vermessen wird. Der Manipulator wird mit seinen Achsen an einem Kalibrierkörper mit mindestens einer Messmarke mit einer ebenen rotationssymmetrischen Kontur kalibriert, wobei die Messmarke mit der optischen Messeinrichtung aus unterschiedlichen Richtungen und mit unterschiedlichen Achsorientierungen des Manipulators angefahren wird.

Die US 4,590,578 beschreibt ein Verfahren zur genauen Aussführung der Operation eines Roboters an einer Mehrzahl von Stellen eines Wekstücks. Das Werkstück wird auf einem Träger (fixture) monitiert. Der Roboter wird so positioniert, dass die Positionen von Ausrichtungspunkten (alignment points) auf dem Träger vermessen werden. Auf der Grundlage dieser Positionen wird eine erste Koordinatentransformation festgelegt. Mit Hilfe der ersten Koordinatentransformation werden aus nominellen Koordinaten von wenigstens zwei Merkmalen des Werkstücks korrigierte Koordinaten dieser Merkmale berechnet. Auf der Grundlage eines Vergleichs der nominellen und der gemessenen Koordinaten der Merkmale wird eine zweite Koordinatentransformation festgelegt. Mit Hilfe derselben werden die Zielkoodinaten des Roboters korrigiert.

Die EP 0 470 257 A1 offenbart ein Roboter-Kalibriersystem zum Umwandeln eines Off-Line-rogramms in ein Bewegungsprogramm für einen Roboter mit Hilfe einer Transformationsmatrix. Mindestens vier nicht in einer Ebene liegende Punkte auf einem Werkstück werden zur Bestimmung der Transformationsmatrix angetastet.

Technische Aufgabe:

Der Erfindung liegt die Aufgabe zu Grunde, Verfahren und eine Vorrichtung bereitzustellen, mit welchen derartige Positions- und Orientierungsfehler kompensiert oder zumindest wesentlich verringert werden.

Offenbarung der Erfindung und ihrer Vorteile:

Die Aufgabe wird erfindungsgemäß gelöst durch ein Verfahren zur Verringerung von Fehlern bei der Positionierung eines Roboterarmes eines Roboters gegenüber einem Werkstück, wobei

- auf das Werkstück ein Werkstück-Koordinatensystem und auf den Roboter ein Roboter-Koordinatensystem bezogen ist, und
- die Fehler dadurch bedingt sind, dass das Roboter-Koordinatensystem gegenüber einem gegebenen Referenz-Koordinatensystem eine Abweichung, nämlich eine Orientierungsabweichung bzw. diese sowie eine Lateralabweichung aufweist,

dadurch gekennzeichnet, dass

a) die Orientierungsabweichung bzw, diese und die Lateralabweichung durch Einmessung des Roboter-Koordinatensystem gegenüber dem Referenz-Einmessung des Roboter-Koordinatensystem gegenüber dem Referenz-Koordinatensystem ermittelt werden, wobei die Koordinaten von mindestens drei beliebigen ersten ortsfesten Aufpunkten bezüglich des Referenz- und des Roboter-Koordinatensystems jeweils festgestellt und miteinander verglichen werden und hieraus

- entweder drei Drehwinkel, welche die Orientierungsabweichung beschreiben, ermittelt werden,
  bzw. die drei Drehwinkel, welche die Orientierungsabweichung beschreiben, sowie drei Versatzstrecken, welche die Lateralabweichung beschreiben, ermittelt werden,
- oder eine diesen drei Drehwinkeln ein-eindeutig zugeordnete 3*3-Matrix, welche die Orientierungsabweichung beschreibt, ermittelt wird,
  bzw. eine den drei Drehwinkeln und den drei Versatzstrecken ein-eindeutig zugeordnete 4*4-Matrix, welche die Orientierungsabweichung und die Lateralabweichung beschreibt, ermittelt wird, und

b) entweder die auf das Roboter-Koordinatensystem bezogenen Koordinaten für jeden vom Roboterarm anzusteuernden Zielpunkt des Werkstücks

- mittels der auf das Referenz-Koordinatensystem bezogenen Koordinaten des Zielpunktes und
- mittels der drei Drehwinkel oder der 3*3-Matrix bzw. mittels der drei Drehwinkel und der drei Versatzstrecken oder der 4*4-Matrix

berechnet werden,
c) oder die gemäß dem Verfahrensschritt a) ermittelten Ergebnisse dazu herangezogen werden, die Orientierung des Roboters bzw. diese sowie die Position des Roboters so zu beeinflussen, dass die Orientierungsabweichung bzw. diese und/oder die Lateralabweichung und damit zumindest ein Teil der Elemente der 3*3-Matrix bzw. der 4*4-Matrix verringert, vorzugsweise minimiert werden.

Die Aufgabe wird ferner erfindungsgemäß gelöst durch eine Vorrichtung zur Verringerung von Fehlern bei der Positionierung eines Roboterarmes eines Roboters gegenüber einem Werkstück, wobei

- auf das Werkstück ein Werkstück-Koordinatensystem und auf den Roboter ein Roboter-Koordinatensystem bezogen ist, und
- die Fehler dadurch bedingt sind, dass das Roboter-Koordinatensystem gegenüber einem gegebenen Referenz-Koordinatensystem eine Abweichung, nämlich eine Orientierungsabweichung bzw. diese sowie eine Lateralabweichung aufweist,

dadurch gekennzeichnet, dass

a) die Vorrichtung ein Messgerät und einen Rechner umfasst, mittels welcher das Roboter-Koordinatensystem gegenüber dem Referenz-Koordinatensystem zum Zweck der Ermittlung der Orientierungsabweichung bzw. derselben und der Lateralabweichung durch Feststellung und Vergleich der Koordinaten von mindestens drei beliebigen ersten ortsfesten Aufpunkten bezüglich des Referenz- und des Roboter-Koordinatensystems einmessbar ist und der Rechner hieraus

- entweder drei Drehwinkel, welche die Orientierungsabweichung beschreiben,

bzw. die drei Drehwinkel, welche die Orientierungsabweichung beschreiben, sowie drei Versatzstrecken, welche die Lateralabweichung beschreiben,

- oder eine diesen drei Drehwinkeln ein-eindeutig zugeordnete 3*3-Matrix, welche die Orientierungsabweichung beschreibt,

  bzw. eine den drei Drehwinkeln und den drei Versatzstrecken ein-eindeutig zugeordnete 4*4-Matrix, welche die Orientierungsabweichung und die Lateralabweichung beschreibt,

zu ermitteln imstande ist, und

b) entweder der Rechner ferner imstande ist, die auf das Roboter-Koordinatensystem bezogenen Koordinaten für jeden vom Roboterarm anzusteuernden Zielpunkt des Werkstücks

- mittels der auf das Referenz-Koordinatensystem bezogenen Koordinaten des Zielpunktes und
- mittels der drei Drehwinkel oder der 3*3-Matrix

  bzw. mittels der drei Drehwinkel und der drei Versatzstrecken oder der 4*4-Matrix

zu berechnen,

c) oder die Vorrichtung ferner eine Stelleinrichtung umfasst, welche imstande ist, unter Heranziehung der gemäß a) ermittelten Ergebnisse die Orientierung des Roboters bzw. diese sowie die Position des Roboters so zu beeinflussen, dass die Orientierungsabweichung bzw. diese und/oder die Lateralabweichung und damit zumindest ein Teil der Elemente der 3*3-Matrix bzw. der 4*4-Matrix verringert, vorzugsweise minimiert werden.

Die Orientierungsabweichung kann insbesondere dadurch verursacht sein, dass auf den Roboter von außen eine Störkraft, z.B. die Schwerkraft, einwirkt. Beispielsweise kann der Roboter auf einer Schiene angeordnet sein, welche unter dem Gewicht des Roboters tordiert wird, wodurch der Roboter seine räumliche Orientierung ändert. Ferner kann sich die Schiene unter dem Gewicht des Roboters nach unten durchbiegen, wodurch eine Lateralverschiebung des Roboters nach unten erfolgt.

Insbesondere kann das Werkstück-Koordinatensystem als Referenz-Koordinatensystem gewählt werden, also Werkstück- und Referenz-Koordinatensystem zugleich sein. In diesem Sonderfall wird also das Werkstück-Koordinatensystem als Referenz-Koordinatensystem herangezogen, so dass das Werkstück-Koordinatensystem und das Referenz-Koordinatensystem identisch sind und die Einmessung des Roboter-Koordinatensystems unmittelbar gegenüber dem Werkstück-Koordinatensystem erfolgt.

Der Roboter kann an eine Mehrzahl von Standorten verfahrbar sein und das Verfahren nacheinander für mindestens einen Teil dieser Standorte jeweils unabhängig durchgeführt werden. Gemäß einer Ausführungsform der Erfindung ist daher das Roboter-Koordinatensystem für mindestens einen Teil dieser Standorte jeweils gegenüber dem Referenz-Koordinatensystem einmessbar.

Die Aufgabe wird ferner gelöst durch ein Verfahren zur Verringerung von Fehlern bei der Positionierung eines Roboterarmes eines Roboters gegenüber einem Werkstück, wobei

- auf das Werkstück ein Werkstück-Koordinatensystem und auf den Roboter ein Roboter-Koordinatensystem bezogen ist,
- der Roboter auf einer Unterlage zwischen einem ersten Standort und mindestens einem zweiten Standort verfahrbar ist, wobei die räumliche Orientierung des Roboter-Koordinatensystems vom Standort des Roboters abhängig ist und dieses am ersten bzw. zweiten Standort in ein erstes bzw. ein zweites Standort-Koordinatensystem übergeht,
- die Fehler dadurch bedingt sind, dass das erste Standort-Koordinatensystem gegenüber dem Werkstück-Koordinatensystem eine Orientierungsabweichung und das zweite gegenüber dem ersten Standort-Koordinatensystem eine Zusatz-Orientierungsabweichung aufweist,

dadurch gekennzeichnet, dass

a) der Roboter an den ersten Standort verfahren und die Orientierungsabweichung durch Einmessung des ersten Standort-Koordinatensystems gegenüber dem Werkstück-Koordinatensystem ermittelt wird, wobei die Koordinaten von mindestens drei beliebigen ersten ortsfesten Aufpunkten bezüglich des Werkstück- und des ersten Standort-Koordinatensystems jeweils festgestellt und miteinander verglichen werden und hieraus

- entweder drei Drehwinkel, welche die Orientierungsabweichung beschreiben, ermittelt werden,
- oder eine diesen drei Drehwinkeln ein-eindeutig zugeordnete 3*3-Matrix, welche die Orientierungsabweichung beschreibt, ermittelt wird,

b) und danach oder zuvor der Roboter an den zweiten Standort verfahren wird und die Zusatz-Orientierungsabweichung durch Einmessung des zweiten gegenüber dem ersten Standort-Koordinatensystems ermittelt wird, wobei die Koordinaten von mindestens drei beliebigen zweiten ortsfesten Aufpunkten bezüglich des ersten und des zweiten Standort-Koordinatensystems jeweils festgestellt und miteinander verglichen werden und hieraus

- entweder drei Zusatz-Drehwinkel, welche die Zusatz-Orientierungsabweichung beschreiben, ermittelt werden,
- oder eine diesen drei Zusatz-Drehwinkeln ein-eindeutig zugeordnete 3*3-Zusatzmatrix, welche die Zusatz-Orientierungsabweichung beschreibt, ermittelt wird, und

c) entweder die auf das zweite Standort-Koordinatensystem bezogenen Koordinaten für jeden vom Roboterarm anzusteuernden Zielpunkt des Werkstücks

- mittels der auf das erste Standort-Koordinatensystem bezogenen Koordinaten des Zielpunktes und
- mittels der drei Drehwinkel und der drei Zusatz-Drehwinkel oder mittels der 3*3-Matrix und der 3*3-Zusatzmatrix

berechnet werden,
oder die gemäß den Verfahrensschritten a) bzw. b) ermittelten Ergebnisse dazu herangezogen werden, die Unterlage im Bereich des ersten bzw. zweiten Standortes so zu beeinflussen, dass die Orientierungsabweichung und damit zumindest ein Teil der Elemente der 3*3-Matrix bzw. die Zusatz-Orientierungsabweichung und damit zumindest ein Teil der Elemente der 3*3-Zusatzmatrix verringert, vorzugsweise minimiert werden.

Bei dem letztgenannten Verfahren wird also zunächst das erste Standort-Koordinatensystem gegen das Werkstück-Koordinatensystem und dann das zweite gegen das erste Standort-Koordinatensystem eingemessen, so dass das zweite Standort-Koordinatensystem indirekt, nämlich auf dem Umweg über das erste Standort-Koordinatensystem, gegen das Werkstück-Koordinatensystem eingemessen wird.

Die gemäß den Verfahrensschritten b) ermittelten Abweichungen bzw. Zusatzabweichungen werden erfindungsgemäß dazu herangezogen, die auf das Roboter-Koordinatensystem bezogenen Koordinaten für jeden vom Roboterarm anzusteuernden Zielpunkt des Werkstücks unter Berücksichtigung der Abweichung zu berechnen ("mathematische Korrektur"), oder alternativ hierzu die Unterlage der Roboters so zu beeinflussen, dass die genannten Abweichungen verringert, vorzugsweise minimiert werden ("mechanische Korrektur").

Die Aufgabe wird ferner gelöst durch eine Vorrichtung zur Verringerung von Fehlern bei der Positionierung eines Roboterarmes eines Roboters gegenüber einem Werkstück, wobei

- auf das Werkstück ein Werkstück-Koordinatensystem und auf den Roboter ein Roboter-Koordinatensystem bezogen ist,
- der Roboter auf einer Unterlage zwischen einem ersten Standort und mindestens einem zweiten Standort verfahrbar ist, wobei die räumliche Orientierung des Roboter-Koordinatensystems vom Standort des Roboters abhängig ist und dieses am ersten bzw. zweiten Standort in ein erstes bzw. ein zweites Standort-Koordinatensystem übergeht,
- die Fehler dadurch bedingt sind, dass das erste Standort-Koordinatensystem gegenüber dem Werkstück-Koordinatensystem eine Orientierungsabweichung und das zweite gegenüber dem ersten Standort-Koordinatensystem eine Zusatz-Orientierungsabweichung aufweist,

dadurch gekennzeichnet, dass

a) bei an den ersten Standort verfahrenem Roboter die Orientierungsabweichung durch Einmessung des ersten Standort-Koordinatensystem gegenüber dem Werkstück-Koordinatensystem ermittelbar ist, indem die Koordinaten von mindestens drei beliebigen ersten ortsfesten Aufpunkten bezüglich des Werkstück- und des ersten Standort-Koordinatensystems jeweils festgestellt und miteinander verglichen werden und hieraus

- entweder drei Drehwinkel, welche die Orientierungsabweichung beschreiben, ermittelt werden,
- oder eine diesen drei Drehwinkeln ein-eindeutig zugeordnete 3*3-Matrix, welche die Orientierungsabweichung beschreibt, ermittelt wird,

b) und bei an den zweiten Standort verfahrenem Roboter die Zusatz-Orientierungsabweichung durch Einmessung des zweiten gegenüber dem ersten Standort-Koordinatensystem ermittelbar ist, indem die Koordinaten von mindestens drei beliebigen zweiten ortsfesten Aufpunkten bezüglich des ersten und des zweiten Standort-Koordinatensystems jeweils festgestellt und miteinander verglichen werden und hieraus

- entweder drei Züsatz-Drehwinkel, welche die Zusatz-Orientierungsabweichung beschreiben, ermittelt werden,

- oder eine diesen drei Zusatz-Drehwinkeln ein-eindeutig zugeordnete 3*3-Zusatzmatrix, welche die Zusatz-Orientierungsabweichung beschreibt, ermittelt wird, und

c) entweder die auf das zweite Standort-Koordinatensystem bezogenen Koordinaten für jeden vom Roboterarm anzusteuernden Zielpunkt des Werkstücks

- mittels der auf das erste Standort-Koordinatensystem bezogenen Koordinaten des Zielpunktes und
- mittels der drei Drehwinkel und der drei Zusatz-Drehwinkel oder mittels der 3*3-Matrix und der 3*3-Zusatzmatrix

berechenbar ist,
oder die gemäß den Verfahrensschritten a) bzw. b) ermittelten Ergebnisse dazu herangezogen werden, die Unterlage im Bereich des ersten bzw. zweiten Standortes so zu beeinflussen, dass die Orientierungsabweichung und damit zumindest ein Teil der Elemente der 3*3-Matrix bzw. die Zusatz-Orientierungsabweichung und damit zumindest ein Teil der Elemente der 3*3-Zusatzmatrix verringerbar, vorzugsweise minimierbar sind.

Z.B. kann die Unterlage des Roboters am zweiten Standort so beeinflusst werden ("mechanische Korrektur"), dass die Zusatz-Orientierungsabweichung und damit zumindest ein Teil der Elemente der 3*3-Zusatzmatrix verringert, vorzugsweise minimiert werden, so dass die Orientierung des zweiten Standort-Koordinatensystems derjenigen des ersten Standort-Koordinatensystems angenähert wird. Dieses Verfahren kann so oft wiederholt werden, bis die Abweichungen der Elemente der 3*3-Zusatzmatrix von den entsprechenden Elementen der 3*3-Matrix jeweils geringer sind als jeweils vorgegebene Grenzwerte, d.h. die Orientierung des zweiten Standort-Koordinatensystems derjenigen des ersten Standort-Koordinatensystems schrittweise angeglichen werden.

Selbstverständlich kann der Roboter an eine Mehrzahl von Standorten verfahrbar sein und dieses Verfahren in analoger Weise für mindestens einen Teil dieser Standorte durchgeführt werden, wodurch eine vorteilhafte Vereinheitlichung der Orientierung der zu diesen Standorten gehörenden, jeweils auf den Roboter bezogenen Koordinatensysteme erreicht wird. Auf diese Weise wird für diesen Teil der Standorte eine vereinfachte Umrechnung der Koordinaten eines beliebigen Aufpunktes aus dem Werkstück-Koordinatensystem in das Roboter-Koordinatensystem möglich, da hierzu lediglich die Lage der Standorte sowie die Orientierung ausschließlich des ersten Standort-Koordinatensystems benötigt wird.

Der Roboter kann zwischen einer Mehrzahl von Standorten verfahrbar sein und das Verfahren nacheinander für die Standorte durchgeführt werden, wobei für jeden Standort ein eigener Satz von drei Drehwinkeln oder eine eigene 3*3-Matrix oder ein eigener Satz von drei Drehwinkeln sowie ein eigener Satz von drei Versatzstrecken oder eine eigene 4*4-Matrix ermittelt wird. Diese Vorgehensweise ist insbesondere dann vorteilhaft, wenn die Orientierung des Roboter-Koordinatensystems in Abhängigkeit vom Standort variiert.

Die so ermittelten Ergebnisse können dazu verwendet werden, aus der Position von mindestens zwei der Standorte und den zu diesen mindestens zwei Standorten jeweils gehörenden Drehwinkeln bzw. Versatzstrecken stetige Funktionen zu ermitteln, welche die Ortsabhängigkeit der Drehwinkel bzw. Versatzstrecken beschreiben, und diese Funktionen können dazu herangezogen werden, für beliebige zwischen den Standorten gelegene weitere Standorte jeweils einen Satz von Drehwinkeln bzw. einen Satz von Versatzstrecken zu berechnen. Auf diese Weise kann auch für solche Standorte die Orientierung bzw. Lage und Orientierung des zugehörigen Roboter-Koordinatensystems ermittelt werden, für welche keine separate Einmessung vorgenommen wurde.

Ebenso kann das Verfahren nacheinander für eine Mehrzahl von unterschiedlichen Belastungszuständen des Roboters durchgeführt werden, wobei für jeden dieser Belastungszustände ein eigener Satz von drei Drehwinkeln oder eine eigene 3*3-Matrix oder ein eigener Satz von drei Drehwinkeln sowie ein eigener Satz von drei Versatzstrecken oder eine eigene 4*4-Matrix ermittelt wird. Diese Vorgehensweise ist dann vorteilhaft, wenn die Orientierung des Roboter-Koordinatensystems in Abhängigkeit vom Belastungszustand des Roboters variiert.

Aus den zu mindestens zwei verschiedenen Belastungszuständen jeweils gehörenden Drehwinkeln bzw. Versatzstrecken können stetige Funktionen ermittelt werden, welche die Abhängigkeit der Drehwinkel bzw. Versatzstrecken von der Belastung des Roboters beschreiben, und diese Funktionen können dazu herangezogen werden, für einen beliebigen Belastungszustand einen Satz von Drehwinkeln bzw. einen Satz von Versatzstrecken zu berechnen. Auf diese Weise kann auch für solche Belastungszustände die Orientierung bzw. Lage und Orientierung des zugehörigen Roboter-Koordinatensystems ermittelt werden, für welche keine separate Einmessung vorgenommen wurde.

Ebenso kann das erfindungsgemäße Verfahren nacheinander für eine Mehrzahl von unterschiedlichen Auslenkungen des Roboterarmes durchgeführt werden, wobei für jede dieser Auslenkungen ein eigener Satz von drei Drehwinkeln oder eine eigene 3*3-Matrix oder ein eigener Satz von drei Drehwinkeln sowie ein eigener Satz von drei Versatzstrecken oder eine eigene 4*4-Matrix ermittelt wird. Diese Vorgehensweise ist insbesondere dann vorteilhaft, wenn die Orientierung des Roboter-Koordinatensystems in Abhängigkeit von der Auslenkung des Roboterarmes variiert.

Aus den zu mindestens zwei verschiedenen Auslenkungen jeweils gehörenden Drehwinkeln bzw. Versatzstrecken können stetige Funktionen ermittelt werden, welche die Abhängigkeit der Drehwinkel bzw. Versatzstrecken von der Auslenkung beschreiben, und diese Funktionen können dazu herangezogen werden, für eine beliebige Auslenkung einen Satz von Drehwinkeln bzw. einen Satz von Versatzstrecken zu berechnen. Auf diese Weise kann auch für solche Auslenkungen die Orientierung bzw. Lage und Orientierung des zugehörigen Roboter-Koordinatensystems ermittelt werden, für welche keine separate Einmessung vorgenommen wurde. Alle genannten Funktionen können z.B. Regressions- oder Fitfunktionen sein, welche nicht nur eine Interpolation zwischen zwei Standorten bzw. Belastungszuständen bzw. Auslenkungen, sondern auch eine Extrapolation erlauben.

Die Aufpunkte können bei jeder Durchführung des Verfahrens neu gewählt werden. Insbesondere können sie jeweils so gewählt werden, dass ihre Koordinaten bezüglich des Roboter-Koordinatensystems für jeden der Standorte bzw. jeden der Belastungszustände jeweils konstant sind, was bedeutet, dass sich die für die erfindungsgemäße Einmessung gewählten mindestens drei Aufpunkte in Abhängigkeit vom Standort und/oder vom Belastungszustand in ihrer Gesamtheit mit dem Roboter-Koordinatensystem mitwandern, jedoch untereinander stets in konstanter, starrer Formation bleiben. Auf diese Weise kann z.B. vorteilhaft vermieden werden, dass die Erfassung der Standort-Abhängigkeit der Orientierung des Roboter-Koordinatensystems nicht durch einen sich überlagernden, von Standort zu Standort wechselnden Einfluss der Auslenkung des Roboterarmes verfälscht wird. Außerdem wird auf diese Weise vorteilhaft die Wiederholgenauigkeit des Roboters zur Ermittlung seiner Orientierung ausgenutzt. Der Roboter kann z.B. linear oder zweidimensional oder dreidimensional an die Standorte verfahrbar sein.

In einer bevorzugten Variante der Erfindung sind das Werkstück-Koordinatensystem, das Referenz-Koordinatensystem und das Roboter-Koordinatensystem jeweils kartesische Koordinatensysteme. Das Messgerät ist in diesem Fall ein Koordinaten-Messgerät für kartesische Koordinaten.

Die erfindungsgemäßen Verfahren lassen sich sehr vorteilhaft nicht nur zur sogenannten Lastkompensation einsetzen. Vielmehr sind die Verfahren auch dazu geeignet, eine Verringerung oder Kompensation der Positionierungsfehler auch dann zu gewährleisten, wenn die Unterlage selbst, z.B. Schiene, auf welcher der Roboter sich bewegt, in Bezug auf ihre Neigung gegen die Horizontale ungleichförmig ist, z.B. schiefe Stellen aufweist, oder sich z.B. von Ort zu Ort unter der Gewichtsbelastung durch den Roboter unterschiedlich stark deformiert. Im Fall einer Schiene kann dies z.B. dadurch bedingt sein, dass die Schiene nur an bestimmten voneinander beabstandeten Orten gegenüber dem Untergrund abgestützt ist, so dass die Deformation der Schiene unter dem Gewicht des Roboters vom Abstand zu diesen Orten abhängt, oder dadurch, dass die Schiene z.B. aufgrund einer Beschädigung stellenweise verbogen oder verzogen ist. Eine weitere Ursache von derartigen räumlichen Inhomogenitäten können thermische Einflüsse, Materialabnutzung oder Materialermüdung sein. Bei Robotern, welche in unterkellerten Räumen arbeiten, kann auch die von Ort zu Ort unterschiedliche Durchbiegung des Bodens unter dem Gewicht des Roboters oder von anderen Einrichtungsgegenständen zu einer ortsabhängigen Neigung des Roboters führen. Eine weitere Ursache von derartigen räumlichen Inhomogenitäten können von Ort zu Ort unterschiedliche Materialeigenschaften der Unterlage sein.

Die Erfindung ist insbesondere auch dazu geeignet, solchen Positionierungsfehlern, die auf einer derartigen im Arbeitsbereich des Roboters vorhandenen inhomogenen Neigung des Untergrundes beruhen, wirksam zu begegnen.

Die Erfindung lässt sich vorteilhafterweise selbst dazu verwenden, die Auswirkung von zeitlichen Änderungen von Ungleichförmigkeiten der genannten Art zu verringern oder zu beseitigen. Hierzu müssen das bzw. die Verfahren lediglich in geeigneten zeitlichen Abständen wiederholt werden. Derartige zeitliche Änderungen können z.B. durch Materialabnutzung oder durch die insbesondere bei großen Gebäuden bisweilen vorkommende langsame "Setzung" der Fundamente oder geringfügige Verschiebungen aufgrund von leichten Erdbeben verursacht sein.

Insbesondere kann der Roboter auf einer Unterlage, wie z.B. einer Schiene, eindimensional verfahrbar sein und das erfindungsgemäße Verfahren entlang der Schiene nacheinander an einer Mehrzahl von voneinander beabstandeten Standorten durchgeführt werden. In einer anderen Variante der Erfindung ist der Roboter auf einer Unterlage zweidimensional verfahrbar, wobei das erfindungsgemäße Verfahren entlang der Schiene nacheinander an einer Mehrzahl von voneinander beabstandeten Standorten durchgeführt wird, welche ein regelmäßiges oder unregelmäßiges zweidimensionales Raster bilden.

Kurzbeschreibung der Zeichnung, in welcher zeigen:

Fig.1    ein Werkstück, auf welches ein Werkstück-Koordinatensystem bezogen ist, und einen auf einer Schiene verfahrbaren Roboter, auf welchen ein Roboter-Koordinatensystem bezogen ist,

Fig. 2    eine schematische Darstellung eines Roboters mit einem Arm, welcher nacheinander fünf verschiedene Aufpunkte ansteuert,

Fig. 3    das Werkstück-Koordinatensystem, das Roboter-Koordinatensystem und die Lage von drei Aufpunkten bezüglich beider Koordinatensysteme,

Fig. 4    drei verschiedene Standort-Koordinatensysteme, welche zu drei Standorten gehören, die linear entlang einer Schiene angeordnet sind,

Fig. 5    einen Zielpunkt und seine Koordinaten im Roboter-Koordinatensystem,

Fig. 6    ein Veranschaulichungsbeispiel für einen "Roboter-Twist" anhand des Zielpunktes von Fig. 4, und

Fig. 7    ein Beispiel für einen gemessenen "Roboter-Twist" bezogen auf eine Ebene.

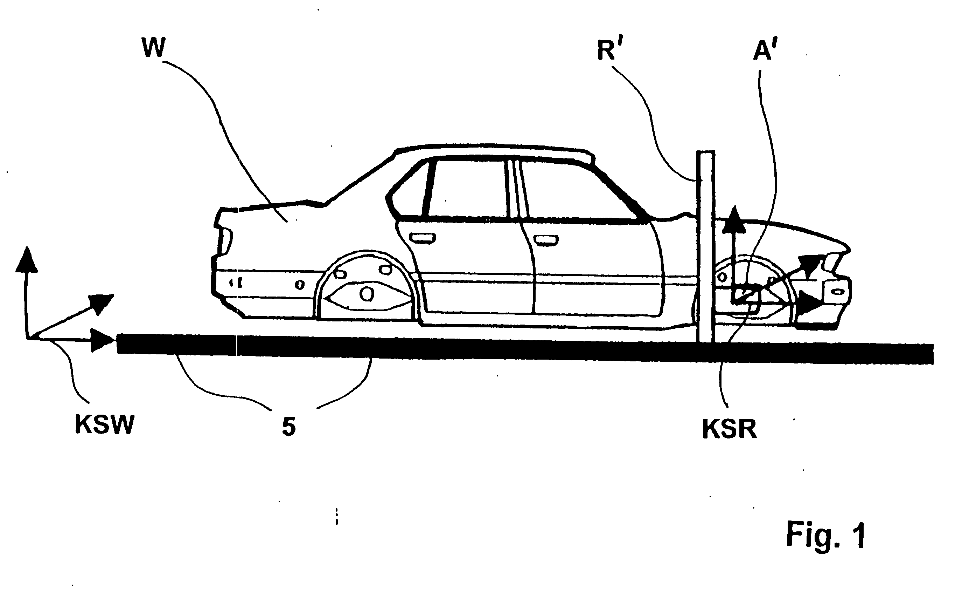

Die Fig.1 bis 7 dienen zur beispielhaften weiteren Erläuterung von Varianten des erfindungsgemäßen Verfahrens zur Verringerung von Fehlern bei der Positionierung eines Roboterarmes gegenüber einem Werkstück Hierbei wird für die Figuren 1 bis 3 von dem für viele Anwendungen besonders vorteilhaften Sonderfall ausgegangen, dass das Werkstück-Koordinatensystem als Referenz-Koordinatensystem gewählt wurde, so dass das Werkstück-Koordinatensystem und das Referenz-Koordinatensystem identisch sind. Die genannten Positionierungsfehler sind in den unter Bezug auf die Fig. 1 bis 7 erläuterten Beispielen dadurch bedingt, dass das Roboter-Koordinatensystem KSR gegenüber dem Werkstück-Koordinatensystem KSW eine Orientierungsabweichung OA aufweist, welche z.B. durch das Eigengewicht des Roboters R und eine dadurch verursachte Biegeverformung bedingt sein kann.

Fig. 1 zeigt schematisch anhand eines ersten Beispiels ein Werkstück W, welches hier die Rohkarosserie eines KFZ ist und auf welches ein Werkstück-Koordinatensystem KSW bezogen ist, und einen auf einer Schiene 5 eindimensional verfahrbaren, um seine vertikale Achse rotierbaren Roboter R' mit einem Arm A', welcher sich heben und senken kann, so dass der Roboter R' mit Hilfe des Armes A' eine Vielzahl von Punkten des Werkstückes W anzusteuern imstande ist. Auf den Roboter R' ist ein Roboter-Koordinatensystem KSR bezogen.

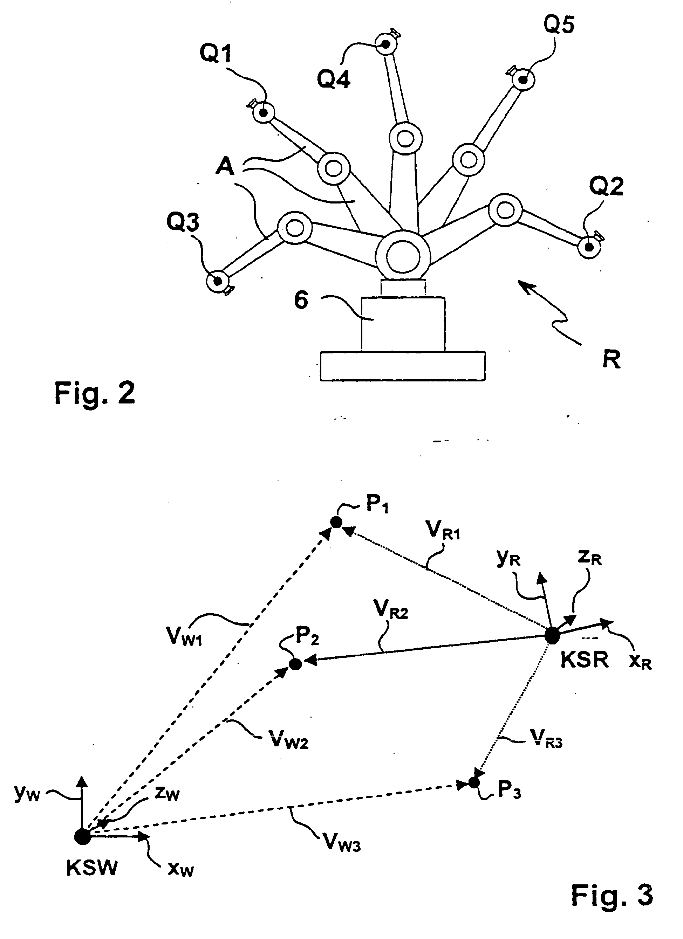

Fig. 2 zeigt eine schematische Darstellung eines anderen Roboters R mit einem Arm A, welcher sich auf einem Sockel 6 befindet und nacheinander fünf verschiedene Aufpunkte Q1,Q2,Q3,Q4,Q5 ansteuert, wobei die entsprechenden, zeitlich nacheinander einzunehmenden Stellungen des Arms A in Fig. 2 aus Gründen der Anschaulichkeit zugleich dargestellt sind und das Werkstück W nicht gezeigt ist. Der Roboter R kann an verschiedene Standorte verfahrbar sein, was in Fig. 2 jedoch nicht dargestellt ist.

Dem Werkstück W ist das Werkstück-Koordinatensystem KSW mit den Achsen xw, yw, $z_w$ zugeordnet (Fig. 3). Ebenso ist dem Roboter sein eigenes Koordinatensystem mit den Achsen $x_R$, $y_R$, $z_R$ zugeordnet, nämlich das Roboter-Koordinatensystem KSR. Mit einem Messgerät werden zur Durchführung des erfindungsgemäßen Verfahrens mindestens drei vom Roboter R (Fig. 2) anzufahrende Punkte, erste Aufpunkte P1, P2, P3 genannt, im Werkstück-Koordinatensystem KSW vermessen und so die Lage des Roboter-Koordinatensystems KSR relativ zu diesem Werkstück-Koordinatensystem KSW rechnerisch bestimmt. Diese beiden Koordinatensysteme können mit Hilfe einer 4*4-Matrix

$$M44 = \begin{pmatrix} a11 & a12 & a13 & a14 \\ a21 & a22 & a23 & a24 \\ a31 & a32 & a33 & a34 \\ a41 & a42 & a43 & a44 \end{pmatrix}$$

ineinander übergeführt werden. Die 16 Elemente $a_{ij}$ dieser Matrix können bestimmt werden wie im Folgenden erläutert wird.

Allgemein ist die gegenseitige Orientierung der beiden Koordinatensysteme KSW, KSR durch drei Drehwinkel $\alpha, \beta, \gamma$ und die gegenseitige laterale Lage der beiden Koordinatensysteme durch drei Versatzstrecken dx, dy, dz gegeben.

Figur 3 dient zur Veranschaulichung der Ermittlung der gegenseitigen Orientierung der beiden Koordinatensysteme KSW, KSW. Zunächst fährt der Roboterarm A (Fig. 2) einen Aufpunkt $P_1$ an, d.h. die Stellung des Roboterarms A sei gegeben bzw. definiert durch den Aufpunkt $P_1$, dessen Position im Roboter-Koordinatensystem KSR mit den Achsen $x_R$, $y_R$, $z_R$ gegeben ist durch einen Vektor $V_{R1}$ mit den Komponenten $R_{X1}$, $R_{Y1}$, $R_{Z1}$, d.h. der Aufpunkt $P_1$ ist im Roboter-Koordinatensystem KSR charakterisiert durch die Koordinaten $R_{X1}$, $R_{Y1}$, $R_{Z1}$. Die Position desselben Aufpunktes $P_1$ im Werkstück-Koordinatensystem KSW mit den Achsen $x_W$, $y_W$, $z_W$ ist dann gegeben durch einen Vektor $V_{W1}$ mit den Komponenten $W_{X1}$, $W_{Y1}$, $W_{Z1}$, d.h. eine Messung der Position des Aufpunktes $P_1$ durch das Messgerät ergibt die Koordinaten $W_{X1}$, $W_{Y1}$, $W_{Z1}$.

Ebenso ist ein zweiter Aufpunkt $P_2$ im Roboter-Koordinatensystem KSR charakterisiert durch die Koordinaten $R_{X2}, R_{Y2}, R_{Z2}$ und im Werkstück-Koordinatensystem KSW durch die Koordinaten $W_{X2}, W_{Y2}, W_{Z2}$. Ebenso ist ein dritter Aufpunkt $P_3$ im Roboter-Koordinatensystem KSR charakterisiert durch die Koordinaten $R_{X3}, R_{Y3}, R_{Z3}$ und im Werkstück-Koordinatensystem KSW durch die Koordinaten $W_{X3}, W_{Y3}, W_{Z3}$.

Durch Feststellung und Vergleich der Koordinaten von mindestens drei beliebigen nicht zusammenfallenden Aufpunkten P1, P2, P3 jeweils im Roboter-Koordinatensystem KSR und im Werkstück-Koordinatensystem KSW, d.h. durch Einmessung dieser mindestens drei Aufpunkte P1, P2, P3 in beide Koordinatensysteme KSR, KSW, kann die gegenseitige Lage und Orientierung dieser beiden Koordinatensysteme KSR, KSW, d.h. alle 16 Elemente der Matrix M44, eindeutig und vollständig bestimmt werden.

Die rein winkelmäßige gegenseitige Orientierung der beiden Koordinatensysteme wird dabei beschrieben durch eine 3*3-Matrix M33, welche eine Untermatrix der Matrix M44 ist und gegeben ist durch

$$M33 = \begin{bmatrix} a11 & a12 & a13 \\ a21 & a22 & a23 \\ a31 & a32 & a33 \end{bmatrix}$$

Diese Matrix beschreibt also eine Überführung bzw. Transformation eines Koordinatensystems in ein anderes, d.h. eine Drehung eines Koordinatensystems im Raum, welche definiert ist durch einen Drehwinkel α um die x-Achse, durch einen Drehwinkel β um die y-Achse und durch einen Drehwinkel γ um die z-Achse. Der Satz von Drehwinkeln α, β, γ ist durch die Matrix M33 ein-eindeutig gegeben.

Nun wird der Fall betrachtet, dass der Roboterarm A zur Ausführung einer Tätigkeit, z.B. zum Vornehmen einer Anschweißung an einer vorgegebenen Stelle einer Roh-Karosserie im Rahmen der Kfz-Produktion, in eine Stellung gebracht werden soll, welche einem bestimmten weiteren Aufpunkt P4, nämlich dem Zielpunkt des Roboterarms A an der Roh-Karosserie entspricht. Die Lage der Roh-Karosserie und damit die Koordinaten des Zielpunktes P4 im Werkstück-Koordinatensystem sind bekannt.

Der Roboterarm A soll nun so gesteuert werden, dass seine Stellung dem Zielpunkt P4 entspricht, d.h. so, dass die Anschweißung am Zielpunkt P4 erfolgt.

Durch vorherige erfindungsgemäße gegenseitige Einmessung der beiden Koordinatensysteme KSW, KSR mittels Einmessung von mindestens drei Aufpunkten P1, P2, P3 in beide Koordinatensysteme KSW, KSR jeweils in der oben erläuterten Weise ist die Matrix M33 bzw. M44 bekannt, was bedeutet, dass die Koordinaten des Aufpunktes P4 im Roboter-Koordinatensystem KSR mittels der Matrix M33 bzw. der Matrix M44 bestimmbar sind und der Roboterarm A daher entsprechend gesteuert werden kann ("mathematische Korrektur", d.h. Verringerung der Positionierungsfehler durch Neuberechnung der Koordinaten mit Hilfe oben erläuterten Einmessung). Die auf das Roboter-Koordinatensystem KSR bezogenen Koordinaten für jeden vom Roboterarm A anzusteuernden Zielpunkt P4 des Werkstücks W werden hierzu erfindungsgemäß mittels der auf das Referenz-Koordinatensystem KSref bezogenen Koordinaten des Zielpunktes P4 und mittels der 3*3-Matrix M33 bzw. mittels der 4*4-Matrix M44 durch einen Rechner berechnet; im Falle der Berechnung mit Hilfe der 3*3-Matrix M33 muss selbstverständlich die Relativposition der Ursprünge der beiden Koordinatensysteme KSW, KSR bekannt sein und eingerechnet werden. Diese Relativposition ist jedoch oftmals auch ohne gegenseitige Einmessung der Koordinatensysteme in der oben erläuterten Weise bekannt, insbesondere dann, wenn der Roboter ortsfest arbeitet oder z.B. mittels eines Steppermotors um definierte Strecken verfahrbar ist, so dass die Position des Roboters und damit auch diejenige des mit ihm mitbewegten Roboter-Koordinaten-Nullpunktes aus der Zahl der Umdrehungen des Steppermotors folgt, oder z.B. mittels eines eigenen Wegaufnehmers gemessen wird

Zusätzliche Probleme bei der Positionierung des Roboterarmes A ergeben sich jedoch, wenn sich die Orientierung und/oder die Lage des Roboter-Koordinatensystems KSR nach der Einmessung ändert. Eine solche Änderung kann insbesondere durch einen auf den Roboter R einwirkenden zusätzlichen Störeinfluss verursacht werden. Ein derartiger zusätzlicher Störeinfluss kann z.B. darin bestehen, dass der Roboterarm A zur Ausführung einer bestimmten Tätigkeit ein schweres Werkzeug heben und tragen muss, so dass aufgrund von dessen Schwerkraft eine zusätzliche elastische Biegeverformung des Roboters R und/oder des Roboterarms A erfolgt. Die Schwerkraft tritt nun also als Störkraft in Erscheinung, durch welche sich die Orientierung und/oder Lage des Roboter-Koordinatensystems KSR ändert, so dass die bestehende Einmessung fehlerhaft wird.

Eine andere oder weitere Ursache für eine Änderung der Orientierung des Roboter-Koordinatensystems KSR kann dadurch gegeben sein, dass sich der Roboter im Rahmen seiner Tätigkeit in Bezug auf das Werkstück-Koordinatensystem KSR zwischen verschiedenen Standorten bewegen muss, z.B. auf einer Schiene 5 hin- und herfährt (Fig. 1), wobei z.B. die Neigung des Untergrundes oder z.B. die Verformung der Schiene 5 oder des Untergrundes unter dem Gewicht des Roboters R von Standort zu Standort verschieden ist. Auch in diesem Fall wirkt die Schwerkraft als Störkraft, wobei das Ausmaß der durch sie bewirkten Störung, nämlich Veränderung der Orientierung des Roboter-Koordinatensystems, jedoch ortsabhängig ist. Wenn z.B. sich die Schiene 5 an einem Standort unter dem Gewicht des Roboters R nach unten durchbiegt, tritt außerdem noch eine Lageverschiebung des Roboter-Koordinatensystems KSR ein.

Derartige durch zusätzliche Störeinflüsse bedingte Änderungen der Orientierung des Roboter-Koordinatensystems gegenüber dem Werkstück-Koordinatensystem KSW führen dazu, dass die gegenseitige Orientierung von Werkstück- und Roboter-Koordinatensystem KSW, KSR nicht mehr durch die obigen Matrizen M33 bzw. M44 beschrieben wird und die Positionierung des Roboterarm A somit erneut fehlerhaft erfolgt. Im oben genannten Beispiel wird dann die Anschweißung nicht wie gewünscht am Zielpunkt P4 erfolgen, sondern an einem von diesem beabstandeten anderen Aufpunkt P5. Derartige Positionierungsfehler wirken sich in der Praxis der Automatisierungstechnik äußerst nachteilig aus.

Gemäß einer besonders vorteilhaften Variante der Erfindung werden derartige zusätzliche Positionierungsfehler dadurch beseitigt oder wesentlich verringert, dass für eine Mehrzahl von Standorten und/oder Belastungszuständen des Roboters R jeweils eine eigene Einmessung in der oben erläuterten Weise erfolgt, was bedeutet, dass für eine Mehrzahl von einzelnen Standorten und/oder eine Mehrzahl von einzelnen Belastungszuständen des Roboters R jeweils eine eigene 3*3-Matrix M'33 bzw. jeweils eine eigene 4*4-Matrix M'44 ermittelt und zur Steuerung des Roboterarmes verwendet wird. Es wird also mindestens eine neue Matrix M'33 bzw. M'44 ermittelt, in welcher der zusätzliche Störeinfluss bereits von vornherein berücksichtigt ist ("mathematische Korrektur").

Zur weiteren Veranschaulichung dieser Variante der Erfindung betrachte man zunächst nochmals einen Roboter R, dessen Roboter-Koordinatensystem KSR in der oben erläuterten, die zusätzlichen Störeinflüsse noch nicht berücksichtigenden Weise gegenüber dem Werkstück-Koordinatensystem KSW eingemessen ist, wodurch die ursprüngliche Matrix M44 bzw. M33 ermittelt ist. Soll durch den Roboterarm A etwa der Zielpunkt P4 angesteuert werden, welcher im Werkstück-Koordinatensystem KSW die Koordinaten $W_{X4}$, $W_{Y4}$, $W_{Z4}$ besitzt, erhält der Roboter R Befehl, im Roboter-Koordinatensystem KSR mit seinem Arm A die Koordinaten $R_{X4}$, $R_{Y4}$, $R_{Z4}$ anzusteuern, welche mit Hilft der Matrix M44 bzw. M33 durch Koordinatentransformation aus den Koordinaten $W_{X4}$, $W_{Y4}$, $W_{Z4}$ bestimmt wurden.

Nun werde dem Roboter eine neue Tätigkeit zugewiesen, bei welcher dieser eine Masse von X kg tragen muss. Hierdurch kommt es zu einer zusätzlichen Biegeverformung des Roboters R und damit zu einer Verdrehung des Roboter-Koordinatensystems KSR gegenüber dem Werkstück-Koordinatensystem KSW, was zusätzliche Positionierungsfehler der oben erläuterten Art nach sich zieht. Diese können erfindungsgemäß dadurch kompensiert oder wesentlich verringert werden, dass zunächst die beiden Koordinatensysteme KSR, KSW gegeneinander neu eingemessen werden, und zwar während der Roboter R die Masse von X kg trägt. Hierdurch wird die neue Matrix M'44 bzw. M'33 gefunden, welche von der zuvor ermittelten ursprünglichen Matrix M44 bzw. M33 verschieden ist.

Nun soll z.B. während der neuen Tätigkeit durch den Roboterarm A wieder der Zielpunkt P4 angesteuert werden, welcher im Werkstück-Koordinatensystem KSW nach wie vor die Koordinaten $W_{X4}$, $W_{Y4}$, $W_{Z4}$, im Roboter-Koordinatensystem nun jedoch die Koordinaten $R'_{X4}$, $R'_{Y4}$, $R'_{Z4}$ besitzt. Der Roboter erhält nun Befehl, im Roboter-Koordinatensystem mit seinem Arm die neuen Koordinaten $R'_{X4}$, $R'_{Y4}$, $R'_{Z4}$ anzusteuern, welche mit Hilfe der Matrix M'44 bzw. M'33 durch Koordinatentransformation aus den Koordinaten $W_{X4}$, $W_{Y4}$, $W_{Z4}$ bestimmt wurden und erfindungsgemäß gegenüber den bisherigen vom Roboter anzusteuernden Koordinaten $R_{X4}$, $R_{Y4}$, $R_{Z4}$ entsprechend der Biegeverformung korrigiert sind.

Nach Ende der neuen und Rückkehr zur bisherigen Tätigkeit bestimmen sich die Koordinaten der anzusteuernden Aufpunkte wieder mittels der ursprünglichen Matrix M44 bzw. M33.

Selbstverständlich kann für eine Mehrzahl oder Vielzahl verschiedener Massen X1, X2, ...Xn nacheinander jeweils gesondert in der genannten Weise vorgegangen werden.

Diese Variante der Erfindung kann weiter verfeinert werden, indem z.B. der Abstand der vom Roboter zu tragenden Masse (X kg) von der Zentralachse des Roboters, d.h. die Auslenkung des Roboterarmes aus dieser Zentralachse berücksichtigt wird. Je größer nämlich dieser Abstand, desto größer ist der für die Biegeverformung wirksame Hebelarm. Daher kann schrittweise für verschiedene Auslenkungen $a_1$, $a_2$, ... an aus der Zentralachse oder der senkrechten Projektion des Fußpunktes des Roboters jeweils eine eigene Matrix $M_{a1}$, $M_{a2}$, ... Man eingemessen werden, so dass die mit der Auslenkung zunehmende stufenweise Hebelwirkung berücksichtigt wird. Dabei kann in entsprechender Weise auch der Sonderfall Masse X = 0, d.h. nur die Wirkung des Eigengewichtes des Roboterarmes, aufgenommen werden.

Als weiteres Anwendungsbeispiel der Erfindung wird ein Roboter R' betrachtet, welcher auf einer Schiene 5 zwischen verschiedenen Standorten linear hin- und herfahren kann (Fig. 1). Im Prinzip kann eine Verfahrachse aus zwei Schienen 5 bestehen, auf denen der Roboter entlang fährt. Diese Schienen 5 sollten im Idealfall parallel verlaufen und nicht verformbar sein. Damit würden die Transformationsmatrizen der gemessenen Roboterpositionen in Bezug auf ein gewähltes Referenzkoordinatensystem keine Verdrehungen besitzen. In der Praxis ist dies nicht der Fall. Bei der Bewegung eines Roboters auf der Verfahrachse "tanzt" dieser auf den beiden Schienen 5 und führt damit eine schwankende Bewegung, den sogenannten RoboTwist, aus.

Da Industrieroboter oftmals Massen von mehreren hundert kg besitzen, wird sich die Schiene 5 unter dem Gewicht des Roboters R' außerdem elastisch verformen, wobei das Ausmaß der Verformung in der Regel über die Länge der Schiene 5 nicht konstant, sondern aufgrund von Inhomogenitäten des Materials, des Untergrundes usw. von Ort zu Ort unterschiedlich ist. Die winkelmäßige Orientierung des Roboter-Koordinatensystems KSR ist daher ortsabhängig, was bedeutet, dass durch Standortwechsel des Roboters R' entlang der Schiene 5 zusätzliche Positionierungsfehler der oben erläuterten Art auch dann entstehen, wenn die Lage der einzelnen Standorte bekannt und bei der Ansteuerung des Zieipunktes berücksichtigt ist.

Dieses Problem erweist sich in der Praxis der Automatisierungstechnik als z.T. so schwerwiegend, dass erheblicher Aufwand zur Stabilisierung, Versteifung und Homogenisieren von Schienen und Untergrund getrieben wird, um diese Positionierungsfehler möglichst klein zu halten; in vielen Fällen ist eine extrem schwere Ausführung der Schienen und der sie tragenden Gebäudedecken die Folge. Trotz dieser Gegenmaßnahmen bleiben meistens erhebliche nicht zu beseitigende Rest-Positionierungsfehler bestehen.

Mit Hilfe der Erfindung kann auf derartige Maßnahmen verzichtet werden, wie im Folgenden weiter erläutert wird.

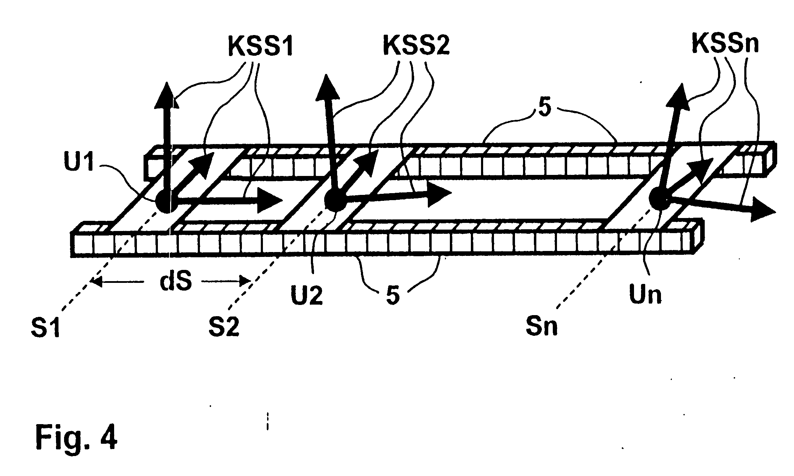

Erfindungsgemäß wird entlang der Schiene eine Mehrzahl n von Standorten, vorzugsweise drei bis sechs je nach Länge der Schiene, festgelegt, welche im Folgenden als S1, S2, ... Sn bezeichnet werden (Fig. 4). Der gegenseitige Abstand der Standorte kann gleichmäßig gewählt werden, jedoch ist dies nicht erforderlich; vielmehr sind auch unregelmäßige Abstände möglich.

Nun wird der (in Fig. 4 nicht gezeigte) Roboter auf der Schiene 5 an den Standort S1 gefahren, welcher z.B. mit dem Anfangspunkt der Schiene 5 zusammenfallen kann. Aufgrund der genannten zusätzlichen Störeinflüsse geht das Roboter-Koordinatensystem KSR am Standort S1 über in ein erstes Standort-Koordinatensystem KSS1, welches gegen des Werkstück-Koordinatensystem KSW mit Hilfe von mindestens drei ersten Aufpunkten P1,P2,P3 eingemessen wird wie oben erläutert. Man erhält eine erste 3*3- oder 4*4-Matrix M1, welche zum Standort S1 gehört.

Anschließend wird der Roboter an einen vom ersten Standort S1 um einen Abstand dS beabstandeten zweiten Standort S2 gefahren, wo das Roboter-Koordinatensystem KSR z.B. aufgrund veränderter Untergrundbedingungen übergeht in ein zweites Standort-Koordinatensystem KSS2, welches seinerseits gegen des Werkstück-Koordinatensystem KSW eingemessen wird wie oben erläutert, wobei jedoch an die Stelle der bisherigen mindestens drei ersten Aufpunkte P1,P2,P3 mindestens drei zweite Aufpunkte Q1,Q2,Q3 treten können, z.B. falls die bisherigen Aufpunkte P1,P2,P3 für den Roboterarm vom Standpunkt S2 aus nicht erreichbar sind. Man erhält eine weitere 3*3- oder 4*4-Matrix M2, welche zum Standort S2 gehört.

Die Aufpunkte können bei jeder neuen Durchführung des Verfahrens, d.h. für jeden Standort S1...Sn, neu gewählt werden. Gemäß einer vorteilhaften Variante der Erfindung werden die zweiten Aufpunkte Q1,Q2,Q3 so gewählt, dass ihre Koordinaten im zweiten Standort-Koordinatensystem KSS2 genau den Koordinaten der ersten Aufpunkte P1,P2,P3 im ersten Standort-Koordinatensystem KSS1 entsprechenden, was bedeutet, dass die Koordinaten der Aufpunkte bezüglich des Roboter-Koordinatensystems KSR für jeden der Standorte jeweils konstant sind. Die relative gegenseitige Anordnung der zweiten Aufpunkte Q1,Q2,Q3 ist in diesem Fall mit derjenigen der ersten Aufpunkte P1,P2,P3 identisch, wobei lediglich die zweiten Aufpunkte Q1,Q2,Q3 in ihrer Gesamtheit als starre Formation gegenüber den ersten Aufpunkten P1,P2,P3 um den Abstand dS verschoben sind. Auf diese Weise kann vorteilhaft vermieden werden, dass die Erfassung der Standort-Abhängigkeit der Orientierung des Roboter-Koordinatensystems nicht durch einen überlagerten, von Standort zu Standort wechselnden Einfluss der Auslenkung des Roboterarmes verfälscht wird. Außerdem wird auf diese Weise vorteilhaft die Wiederholgenauigkeit des Roboters zur Ermittlung seiner Orientierung ausgenutzt.

Man erhält für den Standort S2 eine neue 3*3- oder 4*4-Matrix M2, welche speziell dazu dient, die Koordinaten der vom Roboterarm im Roboter-Koordinatensystem anzusteuernden Zielpunkte zu ermitteln, falls sich der Roboter am dem zu dieser Matrix M2 gehörenden Standort S2 befindet.

Anschließend wird der Roboter nacheinander an alle übrigen Standorte Sn gefahren und dort jeweils das Roboter-Koordinatensystem KSR, welches an jedem Standort S1...Sn in ein diesem Standort zugeordneten Standort-Koordinatensystem KSS1...KSSn übergeht, gegen des Werkstück-Koordinaten system KSW eingemessen, wobei jeweils analog zu der oben erläuterten Vorgehensweise vorgegangen wird. Man erhält für jeden Standort S1...Sn eine 3*3- oder 4*4-Matrix M1...Mn, welche das jeweilige Standort-Koordinatensystem KSS1...KSSn auf das Werkstück-Koordinatensystem KSW transformiert bzw. umgekehrt. Die Ursprünge der Standort-Koordinatensysteme sind in Fig. 4 durch die Punkte U1...Un gekennzeichnet.

Dies bedeutet, dass für jeden dieser Standorte S1...Sn entlang der Schiene 5 eine eigene Matrix M1...Mn ermittelt wird, welche jeweils speziell dazu dient, die Koordinaten der vom Roboterarm A im standortabhängigen Roboter-Koordinatensystem anzusteuernden Zielpunkte zu ermitteln, falls sich der Roboter am dem zu dieser Matrix gehörenden Standort befindet. Bei Übergang des Roboters an einen anderen Standort wird zur Ermittlung der Koordinaten der vom Roboterarm im Roboter-Koordinatensystem anzusteuernden Zielpunkte die verwendete Matrix einfach entsprechend ausgetauscht.

Selbstverständlich ist es nicht zwingend erforderlich, dass die Standorte S1...Sn, wie in Fig. 4 gezeigt, in aufsteigender Reihenfolge linear angeordnet sind.

Eine alternative erfindungsgemäße Möglichkeit besteht darin, die zu den einzelnen Standorten gehörenden Matrizen M1...Mn (oder die jeweils zu zugehörigen Sätze von Drehwinkeln $\alpha1,\beta1,\gamma1 ... an,\beta n,\gamma n$) miteinander zu vergleichen und eine dieser Matrizen Mi bzw. einen dieser Sätze von Drehwinkeln $\alpha i,\beta i,\gamma i$, welche zu einem ausgewählten Standort Si gehören, als Bezugsmatrix bzw. Bezugs-Drehwinkelsatz für die anderen Matrizen bzw. Sätze von Drehwinkeln zu definieren. Das zu dem ausgewählten Standort Si gehörende Standort-Koordinatensystem KSSi, im Folgenden Null-Koordinatensystem genannt, dient dann als Bezugs- oder Referenz-Koordinatensystem KSref und kann selbstverständlich gemäß dem oben erläuterten Verfahren gegenüber dem Werkstück-Koordinatensystem KSW eingemessen werden; alternativ kann das Null-Koordinatensystem auch auf herkömmliche Weise gegen das Werkstück-Koordinatensystem KSW eingemessen sein oder eingemessen werden. Der ausgewählte Standort Si kann z.B. der Standort S1 (Fig. 4) sein, so dass das Null- bzw. Referenz-Koordinatensystem durch das erste Standort-Koordinatensystem KSS1 gegeben ist, und wird bevorzugt im Anfangs- oder Endbereich der Schiene 5 gewählt.

Die Abweichungen der übrigen Standort-Koordinatensysteme relativ zu dem Null-Koordinatensystem KSSi sind dann bezüglich des Werkstück-Koordinatensystems KSW zusätzliche Abweichungen, d.h. Zusatz-Abweichungen, welche sich zu der Abweichung des Null-Koordinatensystems bzw. ReferenzKoordinatensystems KSref vom Werkstück-Koordinatensystem KSW addieren.

Erfindungsgemäß können nun gemäß einer weiteren Variante der Erfindung die übrigen Standort-Koordinatensysteme, anstatt direkt gegen das Werkstück-Koordinatensystem KSW eingemessen zu werden, gegen das Null-Koordinatensystem KSSi eingemessen werden.

Hierzu können ebenfalls die für diese Einmessung verwendeten Aufpunkte jeder Einmessung eines Standort-Koordinatensystems gegen das Null-Koordinatensystem neu gewählt werden. Insbesondere können die Aufpunkte jeweils so gewählt werden, dass ihre Koordinaten bezüglich des Roboter-Koordinatensystems für jeden der Standorte jeweils konstant sind, was bedeutet, dass die gewählten Aufpunkte in Abhängigkeit vom in ihrer Gesamtheit mit dem Roboter-Koordinatensystem mitwandern, jedoch untereinander stets in konstanter, starrer Formation bleiben. Auf diese Weise wird vorteilhaft die Wiederholgenauigkeit des Roboters zur Ermittlung seiner Orientierung ausgenutzt.

An Standorten, an denen die zugehörige Matrix bzw. der zugehörige Drehwinkelsatz von der Bezugsmatrix Mi bzw. dem Bezugs-Drehwinkelsatz $\alpha_i, \beta_i, \gamma_i$ abweicht, d.h. eine Zusatzabweichung festgestellt wird, kann dann alternativ zur Durchführung der oben erläuterten "mathematischen Korrektur" auf die Schiene 5 (Fig. 4) gezielt so eingewirkt werden, z.B. durch Unterlegung von Unterstützungskörpern oder auf sonstige Weise, dass die Abweichungen oder die Zusatzabweichungen gezielt verringert werden ("mechanische Korrektur"). Dies ist möglich, da diese Abweichungen bzw. Zusatzabweichungen gemäß obigem Verfahren bekannt sind und ein Maß für die Fehlanpassung der Schiene 5 an den betreffenden Standorten liefern.

Diese Vorgehensweise kann iterativ wiederholt werden. Hierzu wird in einem nächsten Schritt das Roboter-Koordinatensystem KSR an dem betreffenden Standort erneut eingemessen und bei einer immer noch bestehenden Zusatzabweichung die Anpassung der Schiene 5 an diesem Standort verfeinert, usw. Auf diese Weise kann die Schiene 5 an allen Standorten nacheinander so lange schrittweise angepasst, d.h. die zu den Standortenten gehörenden Matrizen M1...Mn untereinander so lange immer weiter angeglichen werden, bis die Fehlanpassungen, d.h. die Zusatz-Abweichungen an allen übrigen Standorten jeweils einen vorgegebenen Mindestwert unterschreiten. Auf diese Weise wird erfindungsgemäß durch gezielte lokale Eingriffe sehr vorteilhaft eine Homogenisierung des Verformungsverhaltens der Schiene 5 erzielt.

Selbstverständlich ist es nicht zwingend erforderlich, als Null- bzw. Referenz-Koordinatensystem ein solches zu wählen, welches zu einem der Standorte gehört. Vielmehr kann das Referenz-Koordinatensystem KSref jedes Koordinatensystem sein, dessen Lage und Orientierung gegenüber dem Werkstück-Koordinatensystem KSW bekannt sind, z.B. indem es erfindungsgemäß oder auf herkömmliche Weise eingemessen wurde.

Insbesondere können Referenz-Koordinatensystem KSref und Werkstück-Koordinatensystem KSW zusammenfallen, in welchem Fall die Zusatz-Orientierungsabweichungen der Standort-Koordinatensysteme vom Referenz-Koordinatensystem KSref identisch sind mit den Abweichungen der Standort-Koordinatensysteme vom Werkstück-Koordinatensystem KSW. Eine Homogenisierung des Verformungsverhaltens der Schiene 5 führt dann i.d.R. nicht dazu, dass alle diese Abweichungen gegen Null gehen, sondern vielmehr dazu, dass alle diese Abweichungen einer bestimmten Referenz-Abweichung angenähert werden. Daher kann es sehr vorteilhaft sein, als Null- bzw. Referenz-Koordinatensystem ein solches zu wählen, welches zu einem der Standorte S1...Sn gehört; in diesem Fall bedeutet die genannte Homogenisierung des Verformungsverhaltens der Schiene 5 nämlich immer, dass durch diese Variante des erfindungsgemäßen Verfahrens nicht nur ein Konvergieren aller Zusatzabweichungen gegen einen bestimmten einheitlichen Endwert, sondern ein Konvergieren derselben gegen Null erreicht wird, was in vielen Fällen vorteilhaft ist, da Abweichungen von Null messtechnisch oftmals einfacher und genauer erfassbar sind als Abweichungen von einem endlichen Wert.

Die Standorte können beliebig dicht gewählt werden. Somit kann durch die Erfindung erreicht werden, dass die Orientierung des Roboter-Koordinatensystems KSR schließlich bei einem Verfahren des Roboters über die gesamte Schienenlänge praktisch völlig konstant bleibt.

Ein Zielpunkt P6 kann z.B. für den Roboter R sowohl dann erreichbar sein, wenn sich der Roboter R an einem bestimmten Standort Sj befindet, als auch dann, wenn er sich an einem benachbarten Standort Sj+1 befindet. Ein- und derselbe Zielpunkt P6 kann dann im einen Fall mit Hilfe einer zum Standort Sj gehörenden Matrix Mj, im anderen Fall mit Hilfe einer anderen, zu dem benachbarten Messpunkt Sj+1 gehörenden Matrix Mj+1 angesteuert werden.

Die Anwendbarkeit der Erfindung ist nicht auf ortsfeste oder lediglich linear verfahrbare Roboter beschränkt. In einer weiteren Ausgestaltung, welche vorteilhaft für den Fall vorgesehen sein kann, dass der Roboter z.B. auf einem Kreuzschlitten in zwei Raumrichtungen, also auf einer Fläche verfahrbar ist, liegen die Standorte nicht auf einer Geraden, sondern bilden ein die Fläche abdeckendes regelmäßiges oder unregelmäßiges 2-dimensionales Raster, wobei für jeden Rasterpunkt eine eigene zugehörige Matrix eingemessen wird. Die Ortsabhängigkeit der Orientierung des Roboter-Koordinatensystems wird hier also zugleich in zwei Dimensionen berücksichtigt und kompensiert.

Selbstverständlich kann dieses Prinzip in hierzu analoger Weise auch auf drei Dimensionen ausgedehnt werden. In einer derartigen Ausgestaltung, welche vorteilhaft für den Fall vorgesehen sein kann, dass der Roboter in allen drei Raumrichtungen verfahrbar ist, können die Standorte ein den Bewegungsspielraum des Roboters abdeckendes regelmäßiges oder unregelmäßiges 3-dimensionales Raste bilden, wobei wiederum für jeden Rasterpunkt eine eigene zugehörige Matrix eingemessen wird.

In einer anderen Ausgestaltung der Erfindung werden die Zwischenräume zwischen den Standorten durch Interpolation erfasst. Im Fall einer eindimensionalen Verfahrbarkeit des Roboters können die Drehwinkel $\alpha$, $\beta$, $\gamma$, welche die gegenseitige räumliche Orientierung des Roboter- und des Werkstück-Koordinatensystems beschreiben, für einen zwischen zwei Standorten Sk, Sk+1 befindlichen Zwischenstandort aus einer linearen Interpolation jeweils zwischen den Drehwinkeln $\alpha$k und $\alpha$k+1, $\beta$k und $\beta$k+1 sowie $\gamma$k und $\gamma$k+1, welche für diese beiden Standorte ermittelt wurden, angenähert werden. Selbstverständlich kann anstelle der linearen Interpolation auch eine solche durch eine Fit-Funktion (Fit-Kurve), z.B. Regressionskurve, durchgeführt werden, wobei sich die Fit-Funktion auf mehrere oder alle Messpunkte stützen kann oder z.B. auch durch eine Parametrisierung der Drehwinkel als Funktion des Ortes ermittelt werden kann.

Im Fall einer zweidimensionalen Verfahrbarkeit des Roboters kann die Interpolation für jeden der Drehwinkel $\alpha$, $\beta$, $\gamma$ jeweils mit Hilfe einer Fit-Fläche, im Fall einer dreidimensionalen Verfahrbarkeit des Roboters jeweils mit Hilfe einer Fit-Hyperfläche erfolgen. Auf diese Weisen ist erfindungsgemäß eine stufenlose ortsabhängige Korrektur möglich.

Ebenso kann die weiter oben bereits erläuterte Korrektur der Biegeverformung, welche durch verschiedene nacheinander vom Roboter zu tragende Massen X1, X2, ...Xn verursacht wird, durch Interpolation auf Massen-Zwischenwerte ausgedehnt werden, für welche keine eigene Einmessung vorgenommen wurde. Auch hier ist eine lineare Interpolation oder die Erstellung einer Fit-Funktion für die einzelnen Drehwinkel $\alpha$, $\beta$, $\gamma$ der Orientierung des Roboter-Koordinatensystems in Abhängigkeit von der Masse X möglich.

Ebenso kann in völlig entsprechender Weise auch die weiter oben bereits erläuterte Korrektur der Biegeverformung, weiche durch verschiedene Auslenkungen des Roboterarmes von der Zentralachse oder der senkrechten Projektion des Fußpunktes des Roboters verursacht wird, durch Interpolation auf Zwischenwerte der Auslenkung ausgedehnt werden, für welche keine eigene Einmessung vorgenommen wurde. Auch hier ist eine lineare Interpolation oder die Erstellung einer Fit-Funktion für die einzelnen Drehwinkel $\alpha$, $\beta$, $\gamma$ der gegenseitigen Orientierung der Koordinatensysteme in Abhängigkeit von der Auslenkung möglich.

Durch 3*3-Matrizen wird nur die gegenseitige winkelmäßige Orientierung $\alpha$, $\beta$, $\gamma$ der beiden Koordinatensysteme beschrieben, nicht die gegenseitige laterale Position der beiden Koordinaten-Nullpunkte im Raum. Letztere ist jedoch oftmals auch ohne gegenseitige Einmessung der Koordinatensysteme in der oben erläuterten Weise bekannt, insbesondere dann, wenn der Roboter ortsfest arbeitet oder z.B. mittels eines Steppermotors um definierte Strecken verfahrbar ist, so dass die Position des Roboters und damit auch diejenige des mit ihm mitbewegten Roboter-Koordinaten-Nullpunktes aus der Zahl der Umdrehungen des Steppermotors folgt, oder z.B. mittels eines eigenen Wegaufnehmers gemessen wird: In diesen Fällen ist keine 4*4-Matrix zur Koordinatentransformation zwischen beiden Koordinatensystemen erforderlich; in diesen Fällen genügt die entsprechende 3*3-Untermatrix. Die erforderliche Korrektur der Koordinaten in x-, y- und z-Richtung lässt sich dann aus der Lage des Nullpunktes des Roboter-Koordinatensystems, der 3*3-Untermatrix sowie der Entfernung des Aufpunktes von diesem Nullpunkt durch eine einfache trigonometrische Berechnung ermitteln.

Bevorzugt wird als Ursprung des Roboter-Koordinatensystems der Fußpunkt des Roboters gewählt, da in diesem Fall die Lageverschiebung dieses Nullpunktes durch Biegeverformungen in der Regel sehr gering bzw. vernachlässigbar ist.

Ein spezielles Ziel der Erfindung ist die Analyse und Korrektur der Ausrichtung (Position und Orientierung) eines Roboters, insbesondere Industrieroboter, auf mindestens einer Verfahrachse (Linearachse, "7te Achse") unter Berücksichtigung der Auslenkung und der Last des Roboters.

Ein Gegenstand der Erfindung ist die Erfassung und Korrektur dieser Fehler mit Hilfe des Verfahrens "RoboTwist". Mit Hilfe des erfindungsgemäßen Verfahrens wird die Ausrichtung (Position und Orientierung) eines Roboterarmes im kartesischen Raum unter Berücksichtigung der Auslenkung und des Gewichtes des Roboters erfasst und korrigiert. Damit werden die oben beschriebenen Fehler eliminiert und der Roboter kann eine Aufgabe sehr genau durchführen.

Gemäß dem erfindungsgemäßen Verfahren werden die Drehwinkel der Robotertransformationsmatrix zur Korrektur der Fehlereinflüsse erfasst und ausgewertet. Bei der Vermessung der Lage des Roboters kann ferner vorteilhaft die Wiederholgenauigkeit des Roboters ausgenutzt werden. Damit ist die Vermessung der des Roboters mit einer sehr hohen Genauigkeit durchführbar.

Ablauf des Verfahrens:

- Bestimmung der Roboterposition und -orientierung (Koordinatensysteme) auf der Verfahrachse unter Berücksichtigung der Gewichtseinflüsse,
- Bestimmung der Fehler unter Berücksichtigung der Auslenkung des Roboterarmes,
- Korrektur der Fehler.

Bestimmung der Koordinatensysteme:

Zur Bestimmung der Koordinatensysteme unter Berücksichtigung der Gewichtseinflüsse des Roboters werden auf der Verfahrachse (z.B. Schiene 5) nacheinander n Standorte S1...Sn (Messpunkte) angefahren (Fig. 4).

Zur Einmessung eines dieser n Standorte (Messpunkte) S1...Sn werden gemäß einer Variante der Erfindung mit dem Roboterarm p Aufpunkte (mit p≥3) im kartesischen Raum nacheinander angefahren (Fig. 2), wobei bei dieser p-Aufpunkt-Messung die Basis des Roboters R (Roboterfuß) auf der Linearachse 5 nicht bewegt wird. Jeder dieser p Aufpunkte ist im Koordinatensystem KSR des Roboters R bekannt. Mit einem Messgerät zur Bestimmung von Koordinaten im 3D-Raum (z. B. Lasertracker LTD 500 der Fa. Leica) werden diese vom Roboter R angefahrenen Aufpunkte in einem Weltkoordinatensystem vermessen und so die Lage des Koordinatensystems des Roboters KSR relativ zur diesem Weltkoordinatensystem rechnerisch bestimmt. Damit ist der Messpunkt eingemessen.

Dieses Verfahren wird für jede der n Positionen (Messpunkte) wiederholt. Nach Vermessung der p Aufpunkte an einem Standort auf der Verfahrachse 5 und der Bestimmung des jeweiligen Roboter-Koordinatensystems KSS1...KSSn wird der Roboterfuß auf der Achse (z.B. Schiene 5) an den nächsten Standort verfahren und anschließend werden wieder die selben p Punkte (bezüglich des Roboter-Koordinatensystems KSR) angefahren, vermessen und das Koordinatensystem des Roboters KSR bestimmt (siehe Fig. 4). Dieser Vorgang wird so oft wiederholt, bis der Roboter am Ende der Linearachse 5 steht und alle n Standorte angefahren wurden.

Auf Grund der Tatsache, dass an jeder Position auf der Verfahrachse gemäß einer bevorzugten Variante des erfindungsgemäßen Verfahrens stets die selben p Armkonfigurationen (bezogen auf das Roboter-Koordinatensystem) des Roboters angefahren werden, tritt als Fehler bei der Bestimmung des Koordinatensystems des Roboters KSR nur die Wiederholgenauigkeit des Roboters in Erscheinung. Somit ist sicher gestellt, dass die resultierenden Koordinatensysteme KSS1... KSSn, welche die Position und die Orientierung des Roboters an jeder der n Positionen auf der Verfahrachse beschreiben, sehr exakt ermittelt werden können.

Bestimmung der Fehler unter Berücksichtigung der Auslenkung des Roboterarmes:

Bei einer Variante des erfindungsgemäßen Verfahrens werden nun die rotatorischen Fehler des Roboters, der Robotertwist, bei der Bewegung auf der Verfahrachse 5 ausgewertet.

Dazu wird in einem ersten Schritt aus den n ermittelten Standort-Koordinatensysteme KSS1...KSSn ein Bezugssystem, das so genannte Null-Koordinatensystem ausgewählt und als Referenzkoordinatensystem herangezogen.

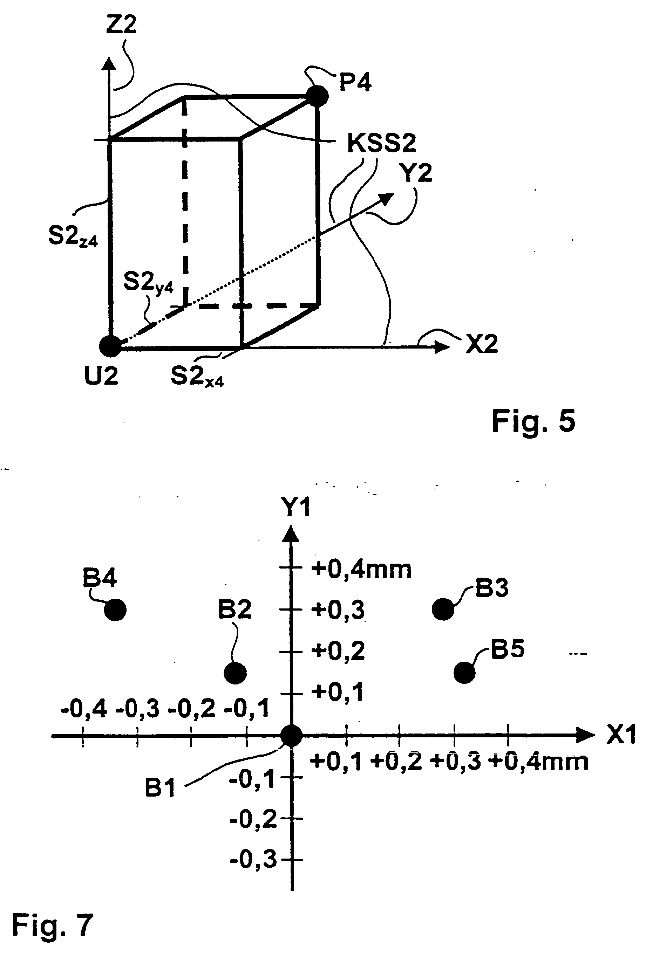

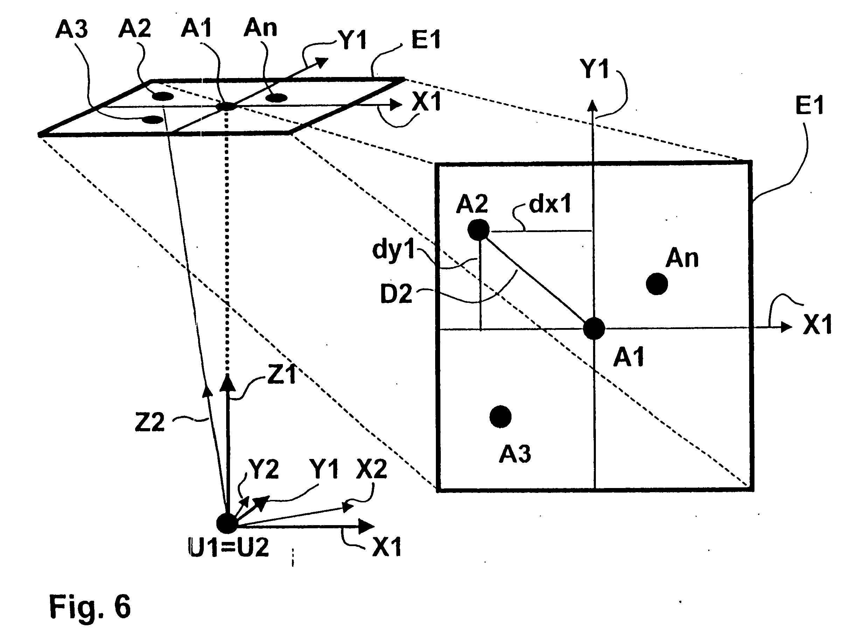

Danach werden die restlichen ermittelten (n-1) Standort-Koordinatensysteme translatorisch in das Null-Koordinatensystem (Referenzkoordinatensystem) KSref verschoben, welches im vorliegenden Beispiel mit dem ersten Standort-Koordinatensystem KSS1 zusammenfällt, da dieses als Null-Koordinatensystem ausgewählt wurde. Im Anschluss daran wird ein Schwerpunkt (Zielpunkt) P4 des Arbeitsbereiches des Roboterarmes A im Roboter-Koordinatensystem KSR festgelegt und in seine X-, Y- und Z-Koordinaten zerlegt. Fig. 5 veranschaulicht dies anhand eines Beispiels, in welchem der Zielpunkt P4 am zweiten Standort S2 im Roboter-Koordinatensystem KSR durch die Koordinaten $S2_{X4}$ , $S2_{Y4}$ , $S2_{Z4}$ gegeben ist, d.h. der Zielpunkt P4 besitzt im zweiten Standort-Koordinatensystem KSS2 diese Koordinaten, wobei der Ursprung dieses Koordinatensystems durch den Punkt U2 und die Achsen dieses Koordinatensystems durch X2, Y2, Z2 gegeben ist (Fig. 5). Zur Beurteilung der Fehler durch die Verkippung des Roboters wird der Schattenwurf jeder dieser Koordinaten auf die jeweilige Ebene (YZ, XZ, XY) herangezogen (Fig. 6). Im Beispiel von Fig. 5 befindet sich der Zielpunkt P4 in einer Höhe $S2_{Z4}$ über der X2-Y2-Ebene, während die Koordinate $S2_{X4}$ bzw. $S2_{Y4}$ den Abstand des Zielpunktes P4 von der Y2-Z2- bzw. X2-Z2-Ebene angeben.

So wird z. B. die Projektion der Z-Koordinate in die XY-Ebene bei der Fehlerkorrektur betrachtet. Fig. 6 zeigt hierzu ein Veranschaulichungsbeispiel für einen "Roboter-Twist" anhand des Zielpunktes P4 von Fig. 5. In Fig. 6 ist die Projektion der Z-Koordinate des Zielpunktes P4 auf die jeweiligen X1-Y1-Ebene des Referenzkoordinatensystems KSS1 dargestellt. Fig. 6 zeigt eine Ebene E1, welche sich P4 in einer Höhe $S2_{Z4}$ über der X1-Y1-Ebene befindet und parallel zu dieser verläuft. Die Z1-Achse des Null-Koordinatensystems durchstößt die Ebene E1 in einem Punkt A1, in welchem sich auch die senkrechten Projektionen X1', Y1' der X1- bzw. Y1-Achse auf diese Ebene schneiden. Aufgrund der Zusatz-Orientierungsabweichung zwischen den Koordinatensystemen KSS1,KSS2 durchstößt die Z2-Achse die E1-Ebene an einem Punkt A2, welcher von dem Punkt A1 einen Abstand D2, von der X1'-Achse einen Abstand dx2 und von der dY'-Achse einen Abstand dy2 aufweist. Der Lageunterschied der Punkte A1, A2 ist ein Maß für den auf die X1-Y1-Ebene bezogenen Lageunterschied des Zielpunktes P4 im ersten und im zweiten Standort-Koordinatensystem KSS1, KSS2 und damit für das Ausmaß des "Roboter-Twists" bezüglich dieser Ebene am zweiten Standort S2. Ein Roboter, welcher am Standort S1 eingemessen und dann zum Standort S2 verfahren wird, würde also ohne Durchführung des erfindungsgemäßen Verfahrens den ihm vorgegebenen Aufpunkt P4 vom zweiten Standort S2 aus um einen Positionierungsfehler dx1 in x-Richtung und um einen Positionierungsfehler dy2 in y-Richtung verfehlen.

Diese Betrachtung lässt sich in analoger Weise für die X1-Z1- und die Y1-Z1-Ebene wiederholen. Ebenso kann in analoger Weise der Roboter-Twist für die übrigen Standorte S3...Sn betrachtet werden; für die X1'-Y1'-Ebene z.B.

erhält man dann weitere Durchstoßpunkte A3...An. Hieran kann erkannt werden, mit welchem Fehler durch die Verkippung der Achsen des Roboters im Arbeitsbereich gerechnet werden muss.

Fig. 7 zeigt ein Beispiel für einen gemessenen "Roboter-Twist" bezogen auf eine Ebene, wobei die unter Bezug auf Fig. 6 erläuterte Vorgehensweise für vier Standorte S2...S5 durchgeführt wurde, was zu dem Null-Koordinatensystem-Durchstoßpunkt B1 und zu vier weiteren Durchstoßpunkten B2...B5 durch die X1'-Y1'-Ebene führt. In dem dargestellten Messergebnis (Fig. 7) ist der Twist eines Roboters Standorte bezogen auf die X-Y-Ebene dargestellt. Bei diesem Roboter wurde der Aufpunkt auf 1000 mm in der Z-Achse festgelegt und an vier Positionen auf der Linearachse vermessen. Die Projektion des Aufpunktes in die XY-Ebene zeigt das mit einem maximalen Fehler von 0.31 mm in der X-Achse und mit einem Fehler von $\pm 0.32$ mm in der Y-Achse zu rechnen ist.

Fehlerkorrektur:

Die Verringerung oder Korrektur der auftretenden Fehler kann erfindungsgemäß durch eine "mathematische Korrektur" oder durch eine "Mechanische Korrektur" erfolgen:

- mechanische Korrektur der Linearachse:

    Bei dieser Methode wird die Lage der Verfahrachse mechanisch durch Anheben bzw. Absenken und durch lineare Ausrichtmethoden entsprechend der ermittelten Fehler korrigiert.

- mathematische Korrektur der Fehiereinfiüsse:

    Bei dieser Methode werden die ermittelten Fehler abschnittsweise mit Hilfe mathematischer Korrekturmethoden eliminiert.

Liste der Bezugszeichen:

| | |
|---|---|
| 5 | Schiene |
| A | Roboterarm |
| A1,A2,An,B1,B2,B3,B4,B5 | Durchstoßpunkte |
| dS | Abstand zwischen U1 und U2 |
| dx,dy,dz | Versatzstrecken |
| OA | Orientierungsabweichung |
| ZOA | Zusatz-Orientierungsabweichung |
| KSR | Roboter-Koordinatensystem |
| KSref | Referenz-Koordinatensystem |
| KSS1, KSS2 | erstes, zweites Standort-Koordinatensystem |
| KSW | Werkstück-Koordinatensystem |
| LA | Lateralabweichung |
| M33, ZM33 | 3*3-Matrix, 3*3-Zusatzmatrix |
| M44, ZM44 | 4*4-Matrix, 4*4-Zusatzmatrix |
| P1, P2, P3 | erste Aufpunkte |

| Q1,Q2,Q3,Q4,Q5 | Aufpunkte |
| --- | --- |
| P4 | Zielpunkte |
| R | Roboter |
| S1, S2, Sn | erster, zweiter, n-ter Standort |
| U1,U2,Un | Ursprünge der Standort-Koordinatensysteme |
| W | Werkstück |
| $\alpha, \beta, \gamma$ | Drehwinkel |
| $\delta, \varepsilon, \phi$ | Zusatz-Drehwinkel |

**Patentansprüche**

1. Verfahren zur Verringerung von Fehlern bei der Positionierung eines Roboterarmes (A,A') eines Roboters (R,R') gegenüber einem Werkstück (W), wobei

   - auf das Werkstück (W) ein Werkstück-Koordinatensystem (KSW) und auf den Roboter (R,R') ein Roboter-Koordinatensystem (KSR) bezogen ist, und
   - die Fehler dadurch bedingt sind, dass das Roboter-Koordinatensystem (KSR) gegenüber einem gegebenen Referenz-Koordinatensystem (KSref) eine Abweichung, nämlich eine Orientierungsabweichung (OA) bzw. diese sowie eine Lateralabweichung (LA) aufweist,

   **dadurch gekennzeichnet, dass**

   a) die Orientierungsabweichung (OA) bzw. diese und die Lateralabweichung (LA) durch Einmessung des Roboter-Koordinatensystem (KSR) gegenüber dem Referenz-Koordinatensystem (KSref) ermittelt werden, wobei die Koordinaten von mindestens drei beliebigen ersten ortsfesten Aufpunkten (P1,P2,P3) bezüglich des Referenz- und des Roboter-Koordinatensystems (KSref, KSR) jeweils festgestellt und miteinander verglichen werden und hieraus

   - entweder drei Drehwinkel ($\alpha,\beta,\gamma$), welche die Orientierungsabweichung (OA) beschreiben, ermittelt werden,
   bzw. die drei Drehwinkel ($\alpha,\beta,\gamma$), welche die Orientierungsabweichung (OA) beschreiben, sowie drei Versatzstrecken (dx,dy,dz), welche die Lateralabweichung (LA) beschreiben, ermittelt werden,
   - oder eine diesen drei Drehwinkeln ($\alpha,\beta,\gamma$) ein-eindeutig zugeordnete 3*3-Matrix (M33), welche die Orientierungsabweichung (OA) beschreibt, ermittelt wird,
   bzw. eine den drei Drehwinkeln ($\alpha,\beta,\gamma$) und den drei Versatzstrecken (dx,dy,dz) ein-eindeutig zugeordnete 4*4-Matrix (M44), welche die Orientierungsabweichung (OA) und die Lateralabweichung (LA) beschreibt, ermittelt wird, und

   b) entweder die auf das Roboter-Koordinatensystem (KSR) bezogenen Koordinaten für jeden vom Roboterarm (A,A') anzusteuernden Zielpunkt (P4) des Werkstücks (W)

   - mittels der auf das Referenz-Koordinatensystem (KSref) bezogenen Koordinaten des Zielpunktes (P4) und
   - mittels der drei Drehwinkel ($\alpha,\beta,\gamma$) oder der 3*3-Matrix (M33) bzw. mittels der drei Drehwinkel ($\alpha,\beta,\gamma$) und der drei Versatzstrecken (dx,dy,dz) oder der 4*4-Matrix (M44)

   berechnet werden,
   c) oder die gemäß dem Verfahrensschritt a) ermittelten Ergebnisse dazu herangezogen werden, die Orientierung des Roboters (R,R') bzw. diese sowie die Position des Roboters (R,R') so zu beeinflussen, dass die Orientierungsabweichung (OA) bzw. diese und/oder die Lateralabweichung (LA) und damit zumindest ein Teil der Elemente der 3*3-Matrix (M33) bzw. der 4*4-Matrix (M44) verringert, vorzugsweise minimiert werden.

2. Verfahren nach Anspruch 1, **dadurch gekennzeichnet,**
   **dass** das Werkstück-Koordinatensystem (KSW) als Referenz-Koordinatensystem (KSref) herangezogen wird, so dass das Werkstück-Koordinatensystem (KSW) und das Referenz-Koordinatensystem (KSref) identisch sind und die Einmessung des Roboter-Koordinatensystems (KSR) unmittelbar gegenüber dem Werkstück-Koordinatensystem (KSW) erfolgt.

3. Verfahren zur Verringerung von Fehlern bei der Positionierung eines Roboterarmes (A,A') eines Roboters (R,R') gegenüber einem Werkstück (W), wobei

   - auf das Werkstück (W) ein Werkstück-Koordinatensystem (KSW) und auf den Roboter (R,R') ein Roboter-Koordinatensystem (KSR) bezogen ist,
   - der Roboter (R,R') auf einer Unterlage (5) zwischen einem ersten Standort (S1) und mindestens einem zweiten Standort (S2) verfahrbar ist, wobei die räumliche Orientierung des Roboter-Koordinatensystems (KSR) vom Standort (S1,S2) des Roboters (R,R') abhängig ist und dieses am ersten bzw. zweiten Standort (S1,S2) in ein erstes bzw. ein zweites Standort-Koordinatensystem (KSS1, KSS2) übergeht,
   - die Fehler dadurch bedingt sind, dass das erste Standort-Koordinatensystem (KSS1) gegenüber dem Werkstück-Koordinatensystem (KSW) eine Orientierungsabweichung und das zweite gegenüber dem ersten Standort-Koordinatensystem (KSS2,KSS1) eine Zusatz-Orientierungsabweichung (ZOA) aufweist,

   **dadurch gekennzeichnet, dass**

   a) der Roboter (R,R') an den ersten Standort (S1) verfahren und die Orientierungsabweichung (OA) durch Einmessung des ersten Standort-Koordinatensystems (KSS1) gegenüber dem Werkstück-Koordinatensystem (KSW) ermittelt wird, wobei die Koordinaten von mindestens drei beliebigen ersten ortsfesten Aufpunkten (P1,P2,P3) bezüglich des Werkstück- und des ersten Standort-Koordinatensystems (KSW, KSS1) jeweils festgestellt und miteinander verglichen werden und hieraus

   - entweder drei Drehwinkel ($\alpha,\beta,\gamma$), welche die Orientierungsabweichung (OA) beschreiben, ermittelt werden,
   - oder eine diesen drei Drehwinkeln ($\alpha,\beta,\gamma$) ein-eindeutig zugeordnete 3*3-Matrix (M33), welche die Orientierungsabweichung (OA) beschreibt, ermittelt wird,

   b) und danach oder zuvor der Roboter (R,R') an den zweiten Standort (S2) verfahren wird und die Zusatz-Orientierungsabweichung (ZOA) durch Einmessung des zweiten gegenüber dem ersten Standort-Koordinatensystem (KSS2,KSS1) ermittelt wird, wobei die Koordinaten von mindestens drei beliebigen zweiten ortsfesten Aufpunkten bezüglich des ersten und des zweiten Standort-Koordinatensystems (KSS1, KSS2) jeweils festgestellt und miteinander verglichen werden und hieraus

   - entweder drei Zusatz-Drehwinkel ($\delta,\epsilon,\phi$), welche die Zusatz-Orientierungsabweichung (ZOA) beschreiben, ermittelt werden,
   - oder eine diesen drei Zusatz-Drehwinkeln ($\delta,\epsilon,\phi$) ein-eindeutig zugeordnete 3*3-Zusatzmatrix (ZM33), welche die Zusatz-Orientierungsabweichung (ZOA) beschreibt, ermittelt wird, und

   c) entweder die auf das zweite Standort-Koordinatensystem (KSS2) bezogenen Koordinaten für jeden vom Roboterarm (A,A') anzusteuernden Zielpunkt des Werkstücks (W)

   - mittels der auf das erste Standort-Koordinatensystem (KSS1) bezogenen Koordinaten des Zielpunktes und
   - mittels der drei Drehwinkel ($\alpha,\beta,\gamma$) und der drei Zusatz-Drehwinkel ($\delta,\epsilon,\phi$) oder mittels der 3*3-Matrix (M33) und der 3*3-Zusatzmatrix (ZM33)

   berechnet werden,
   oder die gemäß den Verfahrensschritten a) bzw. b) ermittelten Ergebnisse dazu herangezogen werden, die Unterlage (5) im Bereich des ersten bzw. zweiten Standortes (S1,S2) so zu beeinflussen, dass die Orientierungsabweichung (OA) und damit zumindest ein Teil der Elemente der 3*3-Matrix (M33) bzw. die Zusatz-Orientierungsabweichung (ZOA) und damit zumindest ein Teil der Elemente der 3*3-Zusatzmatrix (ZM33) verringert, vorzugsweise minimiert werden.

4. Verfahren nach Anspruch 3, **dadurch gekennzeichnet,**

**dass** das Verfahren so oft wiederholt wird, bis die Abweichungen der Elemente der 3*3-Zusatzmatrix (ZM33) von den entsprechenden Elementen der 3*3-Matrix (M33) jeweils geringer sind als jeweils vorgegebene Grenzwerte.

5. Verfahren nach einem der Ansprüche 1 bis 4, **dadurch gekennzeichnet,**
   **dass** der Roboter (R,R') zwischen einer Mehrzahl von Standorten (S1,S2,Sn) verfahrbar ist und das Verfahren nacheinander für die Standorte (S1,S2,Sn) durchgeführt wird, wobei für jeden Standort (S1,S2,Sn) ein eigener Satz von drei Drehwinkeln oder eine eigene 3*3-Matrix oder ein eigener Satz von drei Drehwinkeln sowie ein eigener Satz von drei Versatzstrecken oder eine eigene 4*4-Matrix ermittelt wird.

6. Verfahren nach Anspruch 5, **dadurch gekennzeichnet,**
   **dass** aus der Position von mindestens zwei der Standorte (S1,S2,Sn) und den zu diesen mindestens zwei Standorten (S1,S2,Sn) jeweils gehörenden Drehwinkeln bzw. Versatzstrecken stetige Funktionen ermittelt werden, welche die Ortsabhängigkeit der Drehwinkel bzw. Versatzstrecken beschreiben, und diese Funktionen dazu herangezogen werden, für beliebige zwischen den Standorten (S1,S2,Sn) gelegene weitere Standorte jeweils einen Satz von Drehwinkeln bzw. einen Satz von Versatzstrecken zu berechnen.

7. Verfahren nach einem der Ansprüche 3 bis 6, **dadurch gekennzeichnet,**
   **dass** der Roboter (R,R') linear oder zweidimensional oder dreidimensional an die Standorte (S1,S2,Sn) verfahrbar ist.

8. Verfahren nach einem der Ansprüche 1 bis 6, **dadurch gekennzeichnet,**
   **dass** das Verfahren nacheinander für eine Mehrzahl von unterschiedlichen Belastungszuständen des Roboters (R, R') durchgeführt wird, wobei für jeden dieser Belastungszustände ein eigener Satz von drei Drehwinkeln oder eine eigene 3*3-Matrix oder ein eigener Satz von drei Drehwinkeln sowie ein eigener Satz von drei Versatzstrecken oder eine eigene 4*4-Matrix ermittelt wird.

9. Verfahren nach Anspruch 8, **dadurch gekennzeichnet,**
   **dass** aus den zu mindestens zwei verschiedenen Belastungszuständen jeweils gehörenden Drehwinkeln bzw. Versatzstrecken stetige Funktionen ermittelt werden, welche die Abhängigkeit der Drehwinkel bzw. Versatzstrecken von der Belastung des Roboters (R,R') beschreiben, und diese Funktionen dazu herangezogen werden, für einen beliebigen Belastungszustand einen Satz von Drehwinkeln bzw. einen Satz von Versatzstrecken zu berechnen.

10. Verfahren nach einem der Ansprüche 1 bis 9, **dadurch gekennzeichnet,**
    **dass** das Verfahren nacheinander für eine Mehrzahl von unterschiedlichen Auslenkungen des Roboterarmes (A, A') durchgeführt wird, wobei für jede dieser Auslenkungen ein eigener Satz von drei Drehwinkeln oder eine eigene 3*3-Matrix oder ein eigener Satz von drei Drehwinkein sowie ein eigener Satz von drei Versatzstrecken oder eine eigene 4*4-Matrix ermittelt wird.

11. Verfahren nach Anspruch 10, **dadurch gekennzeichnet,**
    **dass** aus den zu mindestens zwei verschiedenen Auslenkungen jeweils gehörenden Drehwinkeln bzw. Versatzstrecken stetige Funktionen ermittelt werden, welche die Abhängigkeit der Drehwinkel bzw. Versatzstrecken von der Auslenkung beschreiben, und diese Funktionen dazu herangezogen werden, für einen beliebige Auslenkung einen Satz von Drehwinkeln bzw. einen Satz von Versatzstrecken zu berechnen.

12. Verfahren nach Anspruch 6 oder 9 oder 11, **dadurch gekennzeichnet,**
    **dass** die Funktionen Regressions- oder Fitfunktionen sind, welche eine Interpolation zwischen zwei Standorten bzw. Belastungszuständen bzw. Auslenkungen sowie eine Extrapolation erlauben.

13. Verfahren nach Anspruch 5 oder 8, **dadurch gekennzeichnet,**
    **dass** die Aufpunkte (P1,P2,P3,Q1,Q2,Q3) bei jeder Durchführung des Verfahrens so gewählt werden, dass ihre Koordinaten bezüglich des Roboter-Koordinatensystems (KSR) für jeden der Standorte (S1,S2,Sn) bzw. jeden der Belastungszustände jeweils konstant sind.

14. Verfahren nach einem der Ansprüche 1 bis 13, **dadurch gekennzeichnet,**
    **dass** das Werkstück-Koordinatensystem (KSW), das Referenz-Koordinatensystem (KSref) und das Roboter-Koordinatensystem (KSR) jeweils kartesische Koordinatensysteme sind.

15. Vorrichtung zur Verringerung von Fehlern bei der Positionierung eines Roboterarmes (A,A') eines Roboters (R,R') gegenüber einem Werkstück (W), wobei

- auf das Werkstück (W) ein Werkstück-Koordinatensystem (KSW) und auf den Roboter (R,R') ein Roboter-Koordinatensystem (KSR) bezogen ist, und
- die Fehler dadurch bedingt sind, dass das Roboter-Koordinatensystem (KSR) gegenüber einem gegebenen Referenz-Koordinatensystem (KSref) eine Abweichung, nämlich eine Orientierungsabweichung (OA) bzw. diese sowie eine Lateralabweichung (LA) aufweist,

**dadurch gekennzeichnet, dass**

a) die Vorrichtung ein Messgerät und einen Rechner umfasst, mittels welcher das Roboter-Koordinatensystem (KSR) gegenüber dem Referenz-Koordinatensystem (KSref) zum Zweck der Ermittlung der Orientierungsabweichung (OA) bzw. derselben und der Lateralabweichung (LA) durch Feststellung und Vergleich der Koordinaten von mindestens drei beliebigen ersten ortsfesten Aufpunkten (P1,P2,P3) bezüglich des Referenz- und des Roboter-Koordinatensystems (KSref, KSR) einmessbar ist und der Rechner hieraus

- entweder drei Drehwinkel $(\alpha,\beta,\gamma)$, welche die Orientierungsabweichung (OA) beschreiben, bzw. die drei Drehwinkel $(\alpha,\beta,\gamma)$, welche die Orientierungsabweichung (OA) beschreiben, sowie drei Versatzstrecken (dx,dy,dz), welche die Lateralabweichung (LA) beschreiben,
- oder eine diesen drei Drehwinkeln $(\alpha,\beta,\gamma)$ ein-eindeutig zugeordnete 3*3-Matrix (M33), welche die Orientierungsabweichung (OA) beschreibt, bzw. eine den drei Drehwinkeln $(\alpha,\beta,\gamma)$ und den drei Versatzstrecken (dx,dy,dz) ein-eindeutig zugeordnete 4*4-Matrix (M44), welche die Orientierungsabweichung (OA) und die Lateralabweichung (LA) beschreibt,

zu ermitteln imstande ist, und
b) entweder der Rechner ferner imstande ist, die auf das Roboter-Koordinatensystem (KSR) bezogenen Koordinaten für jeden vom Roboterarm (A,A') anzusteuernden Zielpunkt (P4) des Werkstücks (W)

- mittels der auf das Referenz-Koordinatensystem (KSref) bezogenen Koordinaten des Zielpunktes (P4) und
- mittels der drei Drehwinkel $(\alpha,\beta,\gamma)$ oder der 3*3-Matrix (M33) bzw. mittels der drei Drehwinkel $(\alpha,\beta,\gamma)$ und der drei Versatzstrecken (dx,dy,dz) oder der 4*4-Matrix (M44)

zu berechnen,
c) oder die Vorrichtung ferner eine Stelleinrichtung umfasst, welche imstande ist, unter Heranziehung der gemäß a) ermittelten Ergebnisse die Orientierung des Roboters (R,R') bzw. diese sowie die Position des Roboters (R, R') so zu beeinflussen, dass die Orientierungsabweichung (OA) bzw. diese und/oder die Lateralabweichung (LA) und damit zumindest ein Teil der Elemente der 3*3-Matrix (M33) bzw. der 4*4-Matrix (M44) verringert, vorzugsweise minimiert werden.

16. Vorrichtung nach Anspruch 15, **dadurch gekennzeichnet, dass** das Werkstück-Koordinatensystem (KSW) zugleich das Referenz-Koordinatensystem (KSref) ist.

17. Vorrichtung nach einem der Ansprüche 15 oder 16, **dadurch gekennzeichnet, dass** der Roboter (R,R') an eine Mehrzahl von Standorten (S1,S2,Sn) verfahrbar und das Roboter-Koordinatensystem für mindestens einen Teil dieser Standorte (S1,S2,Sn) jeweils gegenüber dem Referenz-Koordinatensystem (KSref) einmessbar ist.

18. Vorrichtung zur Verringerung von Fehlern bei der Positionierung eines Roboterarmes (A,A') eines Roboters (R,R') gegenüber einem Werkstück (W), wobei

- auf das Werkstück (W) ein Werkstück-Koordinatensystem (KSW) und auf den Roboter (R,R') ein Roboter-Koordinatensystem (KSR) bezogen ist,
- der Roboter (R,R') auf einer Unterlage (5) zwischen einem ersten Standort (S1) und mindestens einem zweiten Standort (S2) verfahrbar ist, wobei die räumliche Orientierung des Roboter-Koordinatensystems (KSR) vom Standort (S1,S2) des Roboters (R,R') abhängig ist und dieses am ersten bzw. zweiten Standort (S1,S2) in ein erstes bzw. ein zweites Standort-Koordinatensystem (KSS1, KSS2) übergeht,
- die Fehler dadurch bedingt sind, dass das erste Standort-Koordinatensystem (KSS1) gegenüber dem Werkstück-Koordinatensystem (KSW) eine Orientierungsabweichung und das zweite gegenüber dem ersten Standort-Koordinatensystem (KSS2,KSS1) eine Zusatz-Orientierungsabweichung (ZOA) aufweist,

**dadurch gekennzeichnet, dass** die Vorrichtung Mittel umfasst, mittels welcher

a) bei an den ersten Standort (S1) verfahrenem Roboter (R,R') die Orientierungsabweichung (OA) durch Einmessung des ersten Standort-Koordinatensystems (KSS1) gegenüber dem Werkstück-Koordinatensystem (KSW) ermittelbar ist, indem die Koordinaten von mindestens drei beliebigen ersten ortsfesten Aufpunkten (P1,P2,P3) bezüglich des Werkstück- und des ersten Standort-Koordinatensystems (KSW, KSS1) jeweils festgestellt und miteinander verglichen werden und hieraus

- entweder drei Drehwinkel ($\alpha,\beta,\gamma$), welche die Orientierungsabweichung (OA) beschreiben, ermittelt werden,
- oder eine diesen drei Drehwinkeln ($\alpha,\beta,\gamma$) ein-eindeutig zugeordnete 3*3-Matrix (M33), welche die Orientierungsabweichung (OA) beschreibt, ermittelt wird,

b) und bei an den zweiten Standort (S2) verfahrenem Roboter (R,R') die Zusatz-Orientierungsabweichung (ZOA) durch Einmessung des zweiten gegenüber dem ersten Standort-Koordinatensystem (KSS2,KSS1) ermittelbar ist, indem die Koordinaten von mindestens drei beliebigen zweiten ortsfesten Aufpunkten bezüglich des ersten und des zweiten Standort-Koordinatensystems (KSS1, KSS2) jeweils festgestellt und miteinander verglichen werden und hieraus

- entweder drei Zusatz-Drehwinkel ($\delta,\varepsilon,\phi$), welche die Zusatz-Orientierungsabweichung (ZOA) beschreiben, ermittelt werden,
- oder eine diesen drei Zusatz-Drehwinkeln ($\delta,\varepsilon,\phi$) ein-eindeutig zugeordnete 3*3-Zusatzmatrix (ZM33), welche die Zusatz-Orientierungsabweichung (ZOA) beschreibt, ermittelt wird, und

c) entweder die auf das zweite Standort-Koordinatensystem (KSS2) bezogenen Koordinaten für jeden vom Roboterarm (A,A') anzusteuernden Zielpunkt des Werkstücks (W)

- mittels der auf das erste Standort-Koordinatensystem (KSS1) bezogenen Koordinaten des Zielpunktes und
- mittels der drei Drehwinkel ($\alpha,\beta,\gamma$) und der drei Zusätz-Drehwinkel ($\delta,\varepsilon,\phi$) oder mittels der 3*3-Matrix (M33) und der 3*3-Zusatzmatrix (ZM33)

berechenbar ist,
oder die gemäß den Verfahrensschritten a) bzw. b) ermittelten Ergebnisse dazu herangezogen werden, die Unterlage (5) im Bereich des ersten bzw. zweiten Standortes (S1,S2) so zu beeinflussen, dass die Orientierungsabweichung (OA) und damit zumindest ein Teil der Elemente der 3*3-Matrix (M33) bzw. die Zusatz-Orientierungsabweichung (ZOA) und damit zumindest ein Teil der Elemente der 3*3-Zusatzmatrix (ZM33) verringerbar, vorzugsweise minimierbar sind.

**19.** Vorrichtung nach Anspruch 15 oder 18, **dadurch gekennzeichnet,**
**dass** der Roboter (R,R') linear oder zweidimensional oder dreidimensional an die Standorte (S1,S2,Sn) verfahrbar ist.

**20.** Vorrichtung nach einem der Ansprüche 15 bis 19, **dadurch gekennzeichnet, dass** das Werkstück-Koordinatensystem (KSW), das Referenz-Koordinatensystem (KSref) und das Roboter-Koordinatensystem (KSR) jeweils kartesische Koordinatensysteme sind und das Messgerät ein Koordinaten-Messgerät für kartesische Koordinaten ist.

**Claims**

**1.** A method for reducing errors during the positioning of an arm (A, A') of a robot (R, R') relative to a workpiece (W), whereby

- a workpiece coordinate system (KSW) is related to the workpiece (W) and a robot coordinate system (KSR) is related to the robot (R, R'), and
- the errors are due to the fact that the robot coordinate system (KSR) has a deviation relative to a given reference coordinate system (KSref), namely, an orientation deviation (OA), or else an orientation deviation (OA) as well as a lateral deviation (LA),

**characterized in that**

a) the orientation deviation (OA), or else the orientation deviation (OA) as well as the lateral deviation (LA) are determined by calibrating the robot coordinate system (KSR) with respect to the reference coordinate system (KSref), whereby the coordinates of at least any three first fixed field points (P1, P2, P3) relative to the reference coordinate system (KSref) and to the robot coordinate system (KSR) are each ascertained and compared to each other, and on this basis,

- either three angles of rotation ($\alpha$, $\beta$, $\gamma$) that describe the orientation deviation (OA) are determined,
- or the three angles of rotation ($\alpha$, $\beta$, $\gamma$) that describe the orientation deviation (OA) as well as three displacement distances (dx, dy, dz) that describe the lateral deviation (LA) are determined,
- or a 3*3 matrix (M33) that is bijectively associated with these three angles of rotation ($\alpha$, $\beta$, $\gamma$) and that describes the orientation deviation (OA) is determined,
- or a 4*4 matrix (M44) that is bijectively associated with the three angles of rotation ($\alpha$, $\beta$, $\gamma$) as well as with the three displacement distances (dx, dy, dz) and that describes the orientation deviation (OA) as well as the lateral deviation (LA) is determined,

b) either the coordinates related to the robot coordinate system (KSR) are calculated for each survey point (P4) on the workpiece (W) to which the robot arm (A, A') is to be guided,

- by means of the coordinates of the survey point (P4) related to the reference coordinate system (KSref), and
- by means of the three angles of rotation ($\alpha$, $\beta$, $\gamma$) or by means of the 3*3 matrix (M33), or else by means of the three angles of rotation ($\alpha$, $\beta$, $\gamma$) and by means of the three displacement distances (dx, dy, dz), or by means of the 4*4 matrix (M44),

c) or else the results determined according to method step a) are used in order to influence the orientation of the robot (R, R'), or else the orientation of the robot (R, R') as well as the position of the robot (R, R') in such a way that the orientation deviation (OA), or else the orientation deviation (OA) and/or the lateral deviation (LA) and thus at least some of the elements of the 3*3 matrix (M33) or of the 4*4 matrix (M44) are reduced, preferably minimized.

2. The method according to claim 1, **characterized in that** the workpiece coordinate system (KSW) is used as a reference coordinate system (KSref) so that the workpiece coordinate system (KSW) and the reference coordinate system (KSref) are identical, and the robot coordinate system (KSR) is calibrated directly with respect to the workpiece coordinate system (KSW).

3. A method for reducing errors during the positioning of an arm (A, A') of a robot (R, R') relative to a workpiece (W), whereby

- a workpiece coordinate system (KSW) is related to the workpiece (W), and a robot coordinate system (KSR) is related to the robot (R, R'),
- the robot (R, R') can be moved on a base (5) between a first location (S1) and at least one second location (S2), whereby the spatial orientation of the robot coordinate system (KSR) depends on the location (S1, S2) of the robot (R, R'), and, at the first or second location (S1, S2), said robot coordinate system (KSR) makes a transition into a first or second location coordinate system (KSS1, KSS2),
- the errors are due to the fact that the first location coordinate system (KSS1) has an orientation deviation relative to the workpiece coordinate system (KSW), and the second location coordinate system (KSS2) has an additional orientation deviation (ZOA) relative to the first location coordinate system (KSS1),

**characterized in that**

a) the robot (R, R') is moved to the first location (S1) and the orientation deviation (OA) is determined by calibrating the first location coordinate system (KSS1) with respect to the workpiece coordinate system (KSW), whereby the coordinates of at least any three first fixed field points (P1, P2, P3) relative to the workpiece coordinate system (KSW) and to the first location coordinate system (KSS1) are each ascertained and compared to each other, and on this basis,

- either three angles of rotation ($\alpha$, $\beta$, $\gamma$) that describe the orientation deviation (OA) are determined,

- or a 3*3 matrix (M33) that is bijectively associated with these three angles of rotation ($\alpha$, $\beta$, $\gamma$) and that describes the orientation deviation (OA) is determined,

b) and subsequently or previously, the robot (R, R') is moved to the second location (S2) and the additional orientation deviation (ZOA) is determined by calibrating the second location coordinate system (KSS2) with respect to the first location coordinate system (KSS1), whereby the coordinates of at least any three second fixed field points relative to the first and second location coordinate systems (KSS1, KSS2), are each ascertained and compared to each other, and on this basis,

- either three additional angles of rotation ($\delta$, $\varepsilon$, $\phi$) that describe the additional orientation deviation (ZOA) are determined,
- or a 3*3 matrix (M33) that is bijectively associated with these three additional angles of rotation ($\delta$, $\varepsilon$, $\phi$) and that describes the additional orientation deviation (ZOA) is determined, and

c) either the coordinates related to the second location coordinate system (KSS2) are calculated for each survey point (P4) on the workpiece (W) to which the robot arm (A, A') is to be guided,

- by means of the coordinates of the survey point relate to the first location coordinate system (KSS1), and
- by means of the three angles of rotation ($\alpha$, $\beta$, $\gamma$) and by means of the three additional angles of rotation $\delta$, $\varepsilon$, $\phi$), or else by means of the 3*3 matrix (M33) and the 3*3 additional matrix (ZM33),

or else the results determined according to method step a) or b) are used in order to influence the base (5) in the area of the first or second location (S1, S2) in such a way that the orientation deviation (OA) and thus at least some of the elements of the 3*3 matrix (M33) or else the additional orientation deviation (ZOA) and thus at least some of the elements of the 3*3 additional matrix (ZM33) are reduced, preferably minimized.

4. The method according to claim 3, **characterized in that** the method is repeated until the deviations between the elements of the 3*3 additional matrix (ZM33) and the corresponding elements of the 3*3 matrix (M33) are each less than the prescribed limit values.

5. The method according to one of claims 1 to 4, **characterized in that** the robot (R, R') can be moved between a plurality of locations (S1, S2, Sn), and the method is carried out consecutively for the locations (S1, S2, Sn), whereby for each location (S1, S2, Sn), a specific set of three angles of rotation or a specific 3*3 matrix or a specific set of three angles of rotation as well as a specific set of three displacement distances or a specific 4*4 matrix is determined.

6. The method according to claim 5, **characterized in that** on the basis of the position of at least two of the locations (S1, S2, Sn) and on the basis of the position of the angles of rotation or of the displacement distances belonging to at least two locations (S1, S2, Sn), continuous functions are determined that describe the location-dependence of the angles of rotation or of the displacement distances, and these functions are used to calculate a set of angles of rotation or a set of displacement distances for any additional locations situated between the locations (S1, S2, Sn).

7. The method according to one of claims 3 to 6, **characterized in that** the robot (R, R') can be moved linearly or two-dimensionally or three-dimensionally to the locations (S1, S2, Sn).

8. The method according to one of claims 1 to 6, **characterized in that** the method is carried out consecutively for a plurality of different load states of the robot (R, R'), whereby for each of these load states, a specific set of three angles of rotation or a specific 3*3 matrix or a specific set of three angles of rotation as well as a specific set of three displacement distances or a specific 4*4 matrix are determined.

9. The method according to claim 8, **characterized in that** on the basis of the angles of rotation or of the displacement distances belonging to at least two different load states, continuous functions are determined that describe the dependence of the angles of rotation or of the displacement distances on the load of the robot (R, R'), and these functions are used to calculate a set of angles of rotation or a set of displacement distances for any load state.

10. The method according to one of claims 1 to 9, **characterized in that** the method is carried out consecutively for a plurality of different deflections of the robot arm (A, A'), whereby for each of these deflections, a specific set of three angles of rotation or a specific 3*3 matrix or a specific set of three angles of rotation as well as a specific set of three displacement distances or a specific 4*4 matrix are determined.

**11.** The method according to claim 10, **characterized in that** on the basis of the angles of rotation or of the displacement distances belonging to at least two different deflections, continuous functions are determined that describe the dependence of the angles of rotation or of the displacement distances on the deflection, and these functions are used to calculate a set of angles of rotation or a set of displacement distances for any deflection.

**12.** The method according to claims 6 or 9 or 11, **characterized in that** the functions are regression functions or fit functions that allow an interpolation between two locations or load states or deflections as well as an extrapolation.

**13.** The method according to claim 5 or 8, **characterized in that** the field points (P1, P2, P3, Q1, Q2, Q3) for each execution of the method are selected in such a way that their coordinates are each constant relative to the robot coordinate system (KSR) for each of the locations (S1, S2, Sn) or for each of the load states.

**14.** The method according to one of claims 1 to 13, **characterized in that** the workpiece coordinate system (KSW), the reference coordinate system (KSref) and the robot coordinate system (KSR) are each Cartesian coordinate systems.

**15.** A device for reducing errors during the positioning of an arm (A, A') of a robot (R, R') relative to a workpiece (W), whereby

- a workpiece coordinate system (KSW) is related to the workpiece (W) and a robot coordinate system (KSR) is related to the robot (R, R'), and
- the errors are due to the fact that the robot coordinate system (KSR) has a deviation relative to a given reference coordinate system (KSref), namely, an orientation deviation (OA), or else an orientation deviation (OA) as well as a lateral deviation (LA),

**characterized in that**

a) the device comprises a measuring device and a computer by means of which the robot coordinate system (KSR) can be calibrated with respect to the reference coordinate system (KSref) for purposes of determining the orientation deviation (OA), or else the orientation deviation (OA) as well as the lateral deviation (LA) by ascertaining and comparing the coordinates of at least any three first fixed field points (P1, P2, P3) relative to the reference coordinate system (KSref) and to the robot coordinate system (KSR) and, on this basis, the computer is capable of determining

- either three angles of rotation ($\alpha$, $\beta$, $\gamma$) that describe the orientation deviation (OA),
- or the three angles of rotation ($\alpha$, $\beta$, $\gamma$) that describe the orientation deviation (OA) as well as three displacement distances (dx, dy, dz) that describe the lateral deviation (LA),
- or a 3*3 matrix (M33) that is bijectively associated with these three angles of rotation ($\alpha$, $\beta$, $\gamma$) and that describes the orientation deviation (OA),
- or a 4*4 matrix (M44) that is bijectively associated with the three angles of rotation ($\alpha$, $\beta$, $\gamma$) as well as with the three displacement distances (dx, dy, dz) and that describes the orientation deviation (OA) as well as the lateral deviation (LA),

and
b) either the computer is also capable of calculating the coordinates related to the robot coordinate system (KSR) for each survey point (P4) on the workpiece (W) to which the robot arm (A, A') is to be guided,

- by means of the coordinates of the survey point (P4) related to the reference coordinate system (KSref), and
- by means of the three angles of rotation ($\alpha$, $\beta$, $\gamma$) or by means of the 3*3 matrix (M33), or else by means of the three angles of rotation ($\alpha$, $\beta$, $\gamma$) and by means of the three displacement distances (dx, dy, dz) or by means of the 4*4 matrix (M44),

c) or, making use of the results determined according to a), the device also comprises a setting device that is capable of influencing the orientation of the robot (R, R'), or else the orientation of the robot (R, R') as well as the position of the robot (R, R') in such a way that the orientation deviation (OA), or else the orientation deviation (OA) and/or the lateral deviation (LA) and thus at least some of the elements of the 3*3 matrix (M33) or of the 4*4 matrix (M44) are reduced, preferably minimized.

**16.** The device according to claim 15, **characterized in that** the workpiece coordinate system (KSW) is, at the same time, the reference coordinate system (KSref).

17. The device according to one of claims 15 or 16, **characterized in that** the robot (R, R') can be moved between a plurality of locations (S1, S2, Sn), and the robot coordinate system can be calibrated for at least some of these locations (S1, S2, Sn), in each case with respect to the reference coordinate system (KSref).

18. A device for reducing errors during the positioning of an arm (A, A') of a robot (R, R') relative to a workpiece (W), whereby

- a workpiece coordinate system (KSW) is related to the workpiece (W), and a robot coordinate system (KSR) is related to the robot (R, R'),
- the robot (R, R') can be moved on a base (5) between a first location (S1) and at least one second location (S2), whereby the spatial orientation of the robot coordinate system (KSR) depends on the location (S1, S2) of the robot (R, R'), and, at the first or second location (S1, S2), said robot coordinate system (KSR) makes a transition into a first or second location coordinate system (KSS1, KSS2),
- the errors are due to the fact that the first location coordinate system (KSS1) has an orientation deviation relative to the workpiece coordinate system (KSW, and the second location coordinate system (KSS2) has an additional orientation deviation (ZOA) relative to the first location coordinate system (KSS1),

**characterized in that** the device comprises means by means of which

a) in the case of a robot (R, R') that has been moved to the first location (S1), the orientation deviation (OA) can be determined by calibrating the first location coordinate system (KSS1) with respect to the workpiece coordinate system (KSW), **in that** the coordinates of at least any three first fixed field points (P1, P2, P3) relative to the workpiece coordinate system (KSW) and to the first location coordinate system (KSS1) are each ascertained and compared to each other, and on this basis,

- either three angles of rotation ($\alpha$, $\beta$, $\gamma$) that describe the orientation deviation (OA) are determined,
- or a 3*3 matrix (M33) that is bijectively associated with these three angles of rotation ($\alpha$, $\beta$, $\gamma$) and that describes the orientation deviation (OA) is determined,

b) and, in the case of the robot (R, R') that has been moved to the second location (S2), the additional orientation deviation (ZOA) can be determined by calibrating the second location coordinate system (KSS2) with respect to the first location coordinate system (KSS1), **in that** the coordinates of at least any three second fixed field points relative to the first and second location coordinate systems (KSS1, KSS2) are each ascertained and compared to each other, and on this basis,

- either three additional angles of rotation ($\delta$, $\varepsilon$, $\phi$) that describe the additional orientation deviation (ZOA) are determined,
- or a 3*3 matrix (M33) that is bijectively associated with these three additional angles of rotation ($\delta$, $\varepsilon$, $\phi$) and that describes the additional orientation deviation (ZOA) is determined, and

c) either the coordinates related to the second location coordinate system (KSS2) can be calculated for each survey point on the workpiece (W) to which the robot arm (A, A') is to be guided,

- by means of the coordinates of the survey point related to the first location coordinate system (KSS1), and
- by means of the three angles of rotation ($\alpha$, $\beta$, $\gamma$) and by means of the three additional angles of rotation ($\delta$, $\varepsilon$, $\phi$), or else by means of the 3*3 matrix (M33) and by means of the 3*3 additional matrix (ZM33),

or else the results determined according to method steps a) and b) are used in order to influence the base (5) in the area of the first or second location (S1, S2) in such a way that the orientation deviation (OA) and thus at least some of the elements of the 3*3 matrix (M33), or else the additional orientation deviation (ZOA) and thus at least some of the elements of the 3*3 additional matrix (ZM33) can be reduced, preferably minimized.

19. The device according to claim 15 or 18, **characterized in that** the robot (R, R') can be moved linearly or two-dimensionally or three-dimensionally to the locations (S1, S2, Sn).

20. The device according to one of claims 15 to 19, **characterized in that** the workpiece coordinate system (KSW), the reference coordinate system (KSref) and the robot coordinate system (KSR) are each Cartesian coordinate systems, and the measuring device is a coordinate measuring device for Cartesian coordinates.

**Revendications**

1. Procédé de diminution d'erreurs lors du positionnement d'un bras robotique (A,A') d'un robot (R,R') par rapport à une pièce à usiner (W),
dans lequel,

   - un système de coordonnées de la pièce à usiner (KSW) se rapporte à la pièce à usiner (W) et un système de coordonnées du robot (KSR) se rapporte au robot (R,R'), et
   - les erreurs sont dues à ce que le système de coordonnées du robot (KSR) présente par rapport au système de coordonnées de référence donné (KSref) un écart, à savoir un écart d'orientation (OA) ou celui-ci, ainsi qu'un écart latéral (LA),

   **caractérisé en ce que**

   a) l'écart d'orientation (OA) ou, celui-ci et l'écart latéral (LA) sont déterminés par calibrage du système de coordonnées du robot (KSR) par rapport au système de coordonnées de référence (KSref), les coordonnées d'au moins trois premiers points spatiaux fixes quelconques (P1,P2,P3) par rapport au système de coordonnées de référence et au système de coordonnées du robot (KSref, KSR) étant respectivement établies et comparées entre elles, et à partir de cela,

   - ou bien l'on détermine trois angles de rotation ($\alpha,\beta,\gamma$) qui décrivent l'écart d'orientation (OA), ou l'on détermine les trois angles de rotation ($\alpha,\beta,\gamma$) qui décrivent l'écart d'orientation (OA), ainsi que trois sections de déport (dx,dy,dz) qui décrivent l'écart latéral (LA),
   - ou bien l'on détermine une matrice 3∗3 (M33) biunivoquement assignée aux trois angles de rotation ($\alpha,\beta,\gamma$) qui décrit l'écart d'orientation (OA), ou l'on détermine une matrice 4∗4 (M44) biunivoquement assignée aux trois angles de rotation ($\alpha,\beta,\gamma$) et aux trois sections de déport (dx,dy,dz) qui décrit l'écart d'orientation (OA) et l'écart latéral (LA), et

   b) ou bien les coordonnées rapportées au système de coordonnées du robot (KSR) sont calculées pour chaque point visé (P4) de la pièce à usiner (W) vers lequel se dirige le bras robotique (A,A'),

   - au moyen des coordonnées du point visé (P4) rapportées au système de coordonnées de référence (KSref) et
   - au moyen des trois angles de rotation ($\alpha,\beta,\gamma$) ou de la matrice 3∗3 (M33) ou au moyen des trois angles de rotation ($\alpha,\beta,\gamma$) et des trois sections de déport (dx,dy,dz) ou de la matrice 4∗4 (M44),

   c) ou bien l'on prend les résultats obtenus selon l'étape opératoire a) afin d'agir sur l'orientation du robot (R,R'), ou sur celle-ci, ainsi que sur la position du robot (R,R'), de sorte que l'écart d'orientation (OA) ou celui-ci et/ou l'écart latéral (LA) et, de ce fait, au moins une partie des éléments de la matrice 3∗3 (M33) ou de la matrice 4∗4 (M44) sont réduits, de préférence minimisés.

2. Procédé selon la revendication 1, **caractérisé en ce que** l'on prend le système de coordonnées de la pièce à usiner (KSW) en tant que système de coordonnées de référence (KSref), de sorte que le système de coordonnées de la pièce à usiner (KSW) et le système de coordonnées de référence (KSref) sont identiques et que le calibrage du système de coordonnées du robot (KSR) s'effectue directement par rapport au système de coordonnées de la pièce à usiner (KSW).

3. Procédé de diminution d'erreurs lors du positionnement d'un bras robotique (A,A') d'un robot (R,R') par rapport à une pièce à usiner (W),
dans lequel,

   - un système de coordonnées de la pièce à usiner (KSW) se rapporte à la pièce à usiner (W) et un système de coordonnées du robot (KSR) se rapporte au robot (R,R'),

- le robot (R,R') est déplaçable sur un support (5) entre un premier emplacement (S1) et au moins un deuxième emplacement (S2), l'orientation dans l'espace du système de coordonnées du robot (KSR) dépendant de l'emplacement (S1,S2) du robot (R,R') et ledit système des coordonnées du robot passant du premier ou du deuxième emplacement (S1,S2) à un premier ou un deuxième système de coordonnées de l'emplacement (KSS1,KSS2),

- les erreurs sont dues à ce que le premier système de coordonnées de l'emplacement (KSS1) présente un écart d'orientation par rapport au système de coordonnées de la pièce à usiner (KSW) et que le second système de coordonnées de l'emplacement présente un écart d'orientation supplémentaire (ZOA) par rapport au premier (KSS2,KSS1),

**caractérisé en ce que**

a) le robot (R,R') se déplace sur le premier emplacement (S1) et l'on détermine l'écart d'orientation (OA) par calibrage du premier système de coordonnées de l'emplacement (KSS1) par rapport au système de coordonnées de la pièce à usiner (KSW), les coordonnées d'au moins trois premiers points spatiaux fixes quelconques (P1,P2,P3) par rapport au système de coordonnées de la pièce à usiner et au système de coordonnées du premier emplacement (KSW,KSS1) étant respectivement établies et comparées entre elles, et à partir de cela,

- ou bien l'on détermine trois angles de rotation ($\alpha,\beta,\gamma$) qui décrivent l'écart d'orientation (OA),
- ou bien l'on détermine une matrice 3∗3 (M33) biunivoquement assignée aux trois angles de rotation ($\alpha,\beta,\gamma$) qui décrit l'écart d'orientation (LA),

b) et qu'avant ou après, le robot (R,R') se déplace sur le deuxième emplacement (S2) et l'on calcule l'écart d'orientation supplémentaire (ZOA) par calibrage du deuxième système de coordonnées de l'emplacement par rapport au premier (KSS2,KSS1), les coordonnées d'au moins trois deuxièmes points spatiaux fixes quelconques par rapport au premier et au deuxième système de coordonnées de l'emplacement (KSS1,KSS2) étant respectivement établies et comparées entre elles et à partir de cela,

- ou bien l'on détermine trois angles de rotation supplémentaires ($\delta,\varepsilon,\phi$) qui décrivent l'écart d'orientation supplémentaire (ZOA),
- ou bien l'on détermine une matrice supplémentaire 3∗3 (ZM33) biunivoquement assignée à ces trois angles de rotation supplémentaires ($\delta,\varepsilon,\phi$) qui décrit l'écart d'orientation supplémentaire (ZOA), et

c) ou bien les coordonnées rapportées au système de coordonnées du deuxième emplacement (KSS2) sont calculées pour chacun des points visés de la pièce à usiner (W) vers lesquels se dirige le bras robotique (A,A'),

- au moyen des coordonnées du point visé rapportées au système de coordonnées du premier emplacement (KSS1) et
- au moyen des trois angles de rotation ($\alpha,\beta,\gamma$) et des trois angles de rotation supplémentaires ($\delta,\varepsilon,\phi$) ou au moyen de la matrice 3∗3 (M33) ou de la matrice supplémentaire 3∗3 (ZM33)

ou bien l'on prend les résultats obtenus selon les étapes opératoires a) ou b) afin d'agir sur le support (5) dans la zone du premier ou du deuxième emplacement (S1,S2), de sorte que l'écart d'orientation (OA) et, de ce fait, au moins une partie des éléments de la matrice 3∗3 (M33) ou que l'écart d'orientation supplémentaire (ZOA) et, de ce fait, au moins une partie des éléments de la matrice supplémentaire 3∗3 (ZM33) sont réduits, de préférence minimisés.

4. Procédé selon la revendication 3, **caractérisé en ce que** le procédé est autant répété jusqu'à ce que les écarts des éléments de la matrice supplémentaire 3∗3 (ZM33) par rapport aux éléments correspondants de la matrice 3∗3 (M33) soient respectivement inférieures aux valeurs limite respectivement prédéfinies.

5. Procédé selon l'une des revendications 1 à 4, **caractérisé en ce que** le robot (R,R') est déplaçable entre une pluralité d'emplacements (S1,S2,Sn) et le procédé est effectué successivement pour les emplacements (S1,S2,Sn), un propre ensemble de trois angles de rotation ou une propre matrice 3∗3 ou un propre ensemble de trois angles de rotation ainsi qu'un propre ensemble de trois sections de déport ou une propre matrice 4∗4 étant déterminés pour chacun des emplacements (S1,S2,Sn).

6. Procédé selon la revendication 5, **caractérisé en ce que**,
à partir de la position d'au moins deux des emplacements (S1,S2,Sn) et des angles de rotation ou sections de déport appartenant respectivement à au moins ces deux emplacements (S1,S2,Sn), l'on détermine des fonctions continues qui décrivent la dépendance de l'endroit des angles de rotation ou des sections de déport et l'on a recours à ces fonctions pour calculer un ensemble d'angles de rotation ou un ensemble de sections de déport pour d'autres emplacements quelconques situés entre les emplacements (S1,S2,Sn).

**7.** Procédé selon l'une des revendications 3 à 6, **caractérisé en ce que**,
le robot (R,R') est déplaçable sur les emplacements (S1,S2,Sn) de façon linéaire, bidimensionnelle ou tridimensionnelle.

**8.** Procédé selon l'une des revendications 1 à 6, **caractérisé en ce que**
le procédé est effectué successivement pour une pluralité d'états de charge différents du robot (R,R'), un propre ensemble de trois angles de rotation ou une propre matrice 3∗3 ou bien un propre ensemble de trois angles de rotation ainsi qu'un propre ensemble de trois sections de déport ou une propre matrice 4∗4 étant déterminés pour chacun des états de charge.

**9.** Procédé selon la revendication 8, **caractérisé en ce que**
à partir des angles de rotation ou des sections de déport correspondant respectivement à au moins deux états de charge différents, on détermine des fonctions continues qui décrivent la dépendance entre les angles de rotation ou les sections de déport et la charge du robot (R,R') et l'on a recours à ces fonctions pour calculer un ensemble d'angles de rotation ou un ensemble de sections de déport pour un état de charge quelconque.

**10.** Procédé selon l'une des revendications 1 à 9, **caractérisé en ce que**
le procédé est effectué successivement pour une pluralité de déviations diverses du bras robotique (A,A'), un propre ensemble de trois angles de rotation ou une propre matrice 3∗3 ou bien un propre ensemble de trois sections de déport ou une propre matrice 4∗4 étant déterminés pour chacune de ces déviations.

**11.** Procédé selon la revendication 10, **caractérisé en ce que**
à partir des angles de rotation ou des sections de déport appartenant respectivement à au moins deux déviations différentes, on détermine des fonctions continues qui décrivent la dépendance entre les angles de rotation ou les sections de déport et la déviation, et l'on a recours à ces fonctions pour calculer un ensemble d'angles de rotation ou un ensemble de sections de déport pour une déviation quelconque.

**12.** Procédé selon la revendication 6 ou 9 ou 11, **caractérisé en ce que**
les fonctions sont des fonctions de régression ou des fonctions d'ajustage qui permettent une interpolation entre deux emplacements ou états de charge ou déviations, ainsi qu'une extrapolation.

**13.** Procédé selon la revendication 5 ou 8, **caractérisé en ce que**
lors de chaque mise en oeuvre du procédé, les points spatiaux (P1,P2,P3,Q1,Q2,Q3) sont choisis de sorte que leurs coordonnées sont constantes par rapport au système de coordonnées du robot (KSR) pour chacun des emplacements respectifs (S1,S2,Sn) ou pour chacun des états de charge respectifs.

**14.** Procédé selon l'une des revendications 1 à 13, **caractérisé en ce que**
le système de coordonnées de la pièce à usiner (KSW), le système de coordonnées de référence (KSref) et le système de coordonnées du robot (KSR) sont respectivement des systèmes de coordonnées cartésiens.

**15.** Dispositif de diminution d'erreurs lors du positionnement d'un bras robotique (A,A') d'un robot (R,R') par rapport à une pièce à usiner (W),
dans lequel,

- un système de coordonnées de la pièce à usiner (KSW) se rapporte à la pièce à usiner (W) et un système de coordonnées du robot (KSR) se rapporte au robot (R,R'), et
- les erreurs sont dues à ce que le système de coordonnées du robot (KSR) présente par rapport à un système de coordonnées de référence donné (KSref) un écart, à savoir un écart d'orientation (OA) ou celui-ci, ainsi qu'un écart latéral (LA),

**caractérisé en ce que**,

a) le dispositif comprend un appareil de mesure et un ordinateur, au moyen desquels le système de coordonnées du robot (KSR) peut être calibré par rapport au système de coordonnées de référence (KSref) dans le but de déterminer l'écart d'orientation (OA) ou ledit écart d'orientation et l'écart latéral (LA) par l'établissement et la comparaison entre elles des coordonnées d'au moins trois premiers points spatiaux fixes quelconques (P1,P2,P3) par rapport au système de coordonnées de référence et au système de coordonnées du robot (KSref, KSR), et, à partir de cela, l'ordinateur est en mesure de déterminer

- ou bien trois angles de rotation ($\alpha,\beta,\gamma$) qui décrivent l'écart d'orientation (OA),
ou les trois angles de rotation ($\alpha,\beta,\gamma$) qui décrivent l'écart d'orientation (OA), ainsi que trois sections de déport (dx,dy,dz) qui décrivent l'écart latéral (LA),
- ou bien une matrice 3∗3 (M33) biunivoquement assignée aux trois angles de rotation ($\alpha,\beta,\gamma$) qui décrit l'écart d'orientation (OA),
ou une matrice 4∗4 (M44) biunivoquement assignée aux trois angles de rotation ($\alpha,\beta,\gamma$) et aux trois sections de déport (dx,dy,dz) qui décrit l'écart d'orientation (OA) et l'écart latéral (LA),

et
b) ou bien l'ordinateur est de plus en mesure de calculer les coordonnées se rapportant au système de coordonnées du robot (KSR) pour chaque point visé (P4) de la pièce à usiner (W) vers lequel se dirige le bras robotique (A,A'),

- au moyen des coordonnées du point visé (P4) rapportées au système de coordonnées de référence (KSR), et
- au moyen des trois angles de rotation ($\alpha,\beta,\gamma$) ou de la matrice 3∗3 (M33)
ou au moyen des trois angles de rotation ($\alpha,\beta,\gamma$) et des trois sections de déport (dx,dy,dz) ou de la matrice 4∗4 (M44),

c) ou bien le dispositif comprend en plus un dispositif de réglage qui est en mesure, en prenant les résultats obtenus selon a), d'agir sur l'orientation du robot (R,R'), ou sur celle-ci ainsi que sur la position du robot (R,R'), de sorte que l'écart d'orientation (OA) ou celui-ci et/ou l'écart latéral (LA) et, de ce fait, au moins une partie des éléments de la matrice 3∗3 (M33) ou de la matrice 4∗4 (M44) sont réduits, de préférence minimisés.

16. Dispositif selon la revendication 15, **caractérisé en ce que** le système de coordonnées de la pièce à usiner (KSW) est à la fois le système de coordonnées de référence (KSref).

17. Dispositif selon l'une des revendications 15 ou 16, **caractérisé en ce que** le robot est déplaçable sur une pluralité d'emplacements (S1,S2,Sn) et le système de coordonnées du robot peut être calibré par rapport au système de coordonnées de référence (KSref) pour au moins une partie de ces emplacements (S1,S2,Sn).

18. Dispositif de diminution d'erreurs lors du positionnement d'un bras robotique (A,A') d'un robot (R,R') par rapport à une pièce à usiner (W),
dans lequel,

- un système de coordonnées de la pièce à usiner (KSW) se rapporte à la pièce à usiner (W) et un système de coordonnées du robot (KSR) se rapporte au robot (R,R'),
- le robot (R,R') est déplaçable sur un support (5) entre un premier emplacement (S1) et au moins un deuxième emplacement (S2), l'orientation dans l'espace du système de coordonnées du robot (KSR) dépendant de l'emplacement (S1,S2) du robot (R,R') et ledit système de coordonnées du robot passant au premier ou au deuxième emplacement (S1,S2) vers un premier ou un deuxième système de coordonnées de l'emplacement (KSS1,KSS2),
- les erreurs sont dues à ce que le premier système de coordonnées de l'emplacement (KSS1) présente un écart d'orientation par rapport au système de coordonnées de la pièce à usiner (KSW) et que le second système de coordonnées de l'emplacement présente un écart d'orientation supplémentaire (ZOA) par rapport au premier (KSS2,KSS1),

**caractérisé en ce que**
le dispositif comprend des moyens, à l'aide desquels,

a) l'écart d'orientation (OA) peut être déterminé au premier emplacement (S1) sur lequel le robot (R,R') s'est déplacé, par calibrage du premier système de coordonnées de l'emplacement (KSS1) par rapport au système de coordonnées de la pièce à usiner (KSW), dans la mesure où les coordonnées d'au moins trois premiers points spatiaux fixes quelconques (P1,P2,P3) par rapport au système de coordonnées de la pièce à usiner (W) et au premier système de coordonnées de l'emplacement (KSW,KSS1) sont respectivement établies et comparées entre elles et, à partir de cela,

- ou bien l'on détermine trois angles de rotation ($\alpha,\beta,\gamma$) qui décrivent l'écart d'orientation (OA),
- ou bien l'on détermine une matrice 3∗3 (M33) biunivoquement assignée aux trois angles de rotation ($\alpha,\gamma,\beta$) qui décrit l'écart d'orientation (OA),

b) l'écart d'orientation supplémentaire (ZOA) peut être déterminée au deuxième emplacement (S2) sur lequel le robot (R,R') s'est déplacé, par calibrage du deuxième système de coordonnées de l'emplacement par rapport au premier (KSS1,KSS2), dans la mesure où les coordonnées d'au moins trois deuxièmes points spatiaux fixes quelconques par rapport au premier et au deuxième système de coordonnées de l'emplacement (KSS1,KSS2) sont respectivement établies et comparées entre elles et, à partir de cela,

- ou bien l'on détermine trois angles de rotation supplémentaires ($\delta,\varepsilon,\phi$) qui décrivent l'écart d'orientation supplémentaire,
- ou bien l'on détermine une matrice supplémentaire 3∗3 (M33) biunivoquement assignée aux trois angles de rotation supplémentaires ($\delta,\varepsilon,\phi$) qui décrit l'écart d'orientation supplémentaire (ZOA), et

c) ou bien les coordonnées rapportées au deuxième système de coordonnées de l'emplacement (KSS2) sont calculées pour chaque point visé de la pièce à usiner (W) vers lequel se dirige le bras robotique (A,A'),

- au moyen des coordonnées du point visé rapportées au premier système de coordonnées de l'emplacement (KSS1) et
- au moyen des trois angles de rotation ($\alpha,\beta,\gamma$) et des trois angles de rotation supplémentaires ($\delta,\varepsilon,\phi$) ou bien au moyen de la matrice 3∗3 (M33) et de la matrice supplémentaire 3∗3 (ZM33)

ou bien l'on prend les résultats obtenus selon les étapes opératoires a) ou b) afin d'agir sur le support (5) dans la zone du premier ou du deuxième emplacement (S1,S2) de sorte que l'écart d'orientation (OA) et, de ce fait, au moins une partie des éléments de la matrice supplémentaire 3∗3 (ZM33) sont réductibles, de préférence minimisables.

**19.** Dispositif selon la revendication 15 ou 18, **caractérisé en ce que** le robot (R,R') est déplaçable sur les emplacements (S1,S2,Sn) de façon linéaire, bidimensionnelle ou tridimensionnelle.

**20.** Dispositif selon l'une des revendications 15 à 19, **caractérisé en ce que** le système de coordonnées de la pièce à usiner (KSW), le système de coordonnées de référence (KSref) et le système de coordonnées du robot (KSR) sont respectivement des systèmes de coordonnées cartésiens et l'appareil de mesure est un système de mesure de coordonnées pour coordonnées cartésiennes.

W    R′    A′

KSW    5    KSR

Fig. 1

EP 1 436 125 B1

**Q1**

**Q4**

**Q5**

**A**

**Q3**

**Q2**

**6**

**R**

# Fig. 2

$P_1$

$V_{R1}$

$y_R$ $z_R$

$V_{R2}$

$V_{W1}$

$P_2$

KSR $x_R$

$V_{W2}$

$V_{R3}$

$y_W$ $z_W$

$P_3$

$V_{W3}$

KSW $x_W$

# Fig. 3

Fig. 4

EP 1 436 125 B1

Fig. 5

Fig. 7

**Fig. 6**

EP 1 436 125 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0353585 A2
- WO 0100370 A
- US 4590578 A
- EP 0470257 A1